# EUROPÄISCHE PATENTANMELDUNG

(11) **EP 4 205 928 A1**
(43) Veröffentlichungstag der Anmeldung: **05.07.2023**
(21) Anmeldenummer: 23153010.6
(22) Anmeldetag: 18.05.2018
(51) Int. Cl.: B27G 19/02, F16P 3/14

(54) **SICHERHEITSVORRICHTUNG FÜR EINE FORMATKREISSÄGE**

(30) Priorität: 18.05.2017 DE 202017103019 U
(62) Teilanmeldung aus: 18173167.0
(71) Anmelder: Altendorf GmbH, 32429 Minden (DE)
(72) Erfinder: Altendorf, Wilfried, 32429 Minden (DE)
(74) Vertreter: Eisenführ Speiser

(57) **Zusammenfassung**

Die Erfindung betrifft eine Formatkreissäge, insbesondere zur Bearbeitung von Holz- und/oder Kunststoffmaterialien, und ein computerimplementiertes Verfahren zur Steuerung und/oder Regelung einer Formatkreissäge. Insbesondere betrifft die Erfindung eine Formatkreissäge, insbesondere zur Bearbeitung von Holz- und/oder Kunststoffmaterialien, umfassend eine Werkstückauflagefläche mit einem Sägeschlitz, ein Sägeaggregat mit einem Kreissägeblatt, das eine Vielzahl an Sägezähnen zum Bearbeiten von Werkstücken aufweist, wobei das Kreissägeblatt an dem Sägeaggregat unterhalb der Werkstückauflagefläche drehbar gelagert ist und in einem Sägebetriebsmodus durch den Sägeschlitz hindurchragt, eine Detektionsvorrichtung zur Erkennung mindestens eines Gefährdungszustandes für ein menschliches Körperteil durch das Sägeblatt, eine Sicherheitsvorrichtung zur Vermeidung von Verletzungen eines menschlichen Körperteils durch das Kreissägeblatt mittels einer Sicherheitsmaßnahme, und eine Steuerungsvorrichtung.

## Beschreibung

Die Erfindung betrifft eine Formatkreissäge mit einer Sicherheitsvorrichtung, insbesondere zur Bearbeitung von Holz- und/oder Kunststoffmaterialien, und ein computerimplementiertes Verfahren zur Steuerung und/oder Regelung einer Formatkreissäge mit einer solchen Sicherheitsvorrichtung.

Formatkreissägen werden dazu eingesetzt, um mittels eines Kreissägeblatts Plattenmaterial, Profile und andere Werkstücke maßgenau zuzuschneiden. Dabei kommen leistungsstarke Antriebsmotoren und große Kreissägeblätter zum Einsatz um die geforderten Schneidleistungen zu erfüllen. Oftmals wird ein Werkstück auf einer Seite mittels eines Vorritzers auf einer geringen Schnitttiefe vorgeritzt, um einen ausrissfreien Austritt der Schneidezähne auf dieser Seite zu erzielen und folglich beidseits eine saubere Schnittkante zu erhalten. Eine Formatkreissäge ist allgemein vorbekannt aus der EP2527069 (A1), der DE202009007150 (U1) oder der WO2012159956 (A1).

Generell kann eine Formatkreissäge durch einen ausgebildeten Benutzer und bei Einsatz geeigneter Sicherheitseinrichtungen wie beispielsweise eines Schiebestocks für kurze und schmale Werkstücke sicher bedient werden. Allerdings geht von dem Kreissägeblatt und gfs. eingeschränkt auch dem Vorritzsägeblatt eine Verletzungsgefahr aus.

Formatkreissägen können insbesondere bei Benutzung durch weniger erfahrenes und/oder ausgebildetes Personal eine Verletzungsgefahr darstellen.

Ursächlich für Verletzungen ist nach Erkenntnis der Erfinder in erster Linie die Missachtung der Arbeitsschutz- und Sicherheitsvorschriften. Es ist beispielsweise bekannt, dass Schutzhauben, die das Kreissägeblatt abdecken, demontiert werden oder der beim Bearbeiten schmaler Werkstücke zwingend vorgeschriebene Schiebestock, der die Hand aus dem Gefahrenbereich des Kreissägeblattes hält, nicht verwendet wird. Darüber hinaus können auch Unaufmerksamkeiten oder Ablenkungen des Bedienpersonals beim Arbeiten mit einer Formatkreissäge zu einem Kontakt eines Körperteils mit dem Kreissägeblatt führen.

Darüber hinaus entsteht nach Erkenntnis der Erfinder in Einzelfällen ein Gefahrenpotenzial durch Formatkreissägen in im Wesentlichen nicht vorhersehbaren Sondersituationen. Sondersituationen können beispielsweise dadurch entstehen, dass eine Person im Umfeld einer Formatkreissäge stolpert oder anderweitig seine Bewegungskontrolle verliert und in Folge dessen ein Körperteil an das sich rotierende Kreissägeblatt gelangt. Insbesondere aufgrund der Schwere der Verletzung im Falle eines Unfalls mit Formatkreissägen werden verschiedene Bemühungen unternommen, um den Benutzer vor Verletzungen zu schützen.

Aus dem schriftlichen Stand der Technik sind zahlreiche Systeme bekannt, die jeweils einen bestimmten Ansatz zur Erkennung einer Gefahrensituation und eine daran angepasste Aktion zur Vermeidung oder Verringerung der Verletzungsgefahr bei dieser erkannten Gefahrensituation beinhalten.

So ist aus der US 2002/0170399 A1 ein System bekannt, bei dem ein Kontakt zwischen Haut und Kreissägeblatt durch eine elektrische Leitfähigkeitsmessung über eine am Kreissägeblatt anliegende elektrische Spannung detektiert und infolgedessen ein Gefahrenzustand erfasst wird. Als anschließende Sicherheitsmaßnahme in Folge eines solcher Art gewonnenen Signals wird eine vorgespannte Feder entspannt und mit der freigegebenen Federkraft ein Kunststoffelement in die Schneide des Kreissägeblatts gedrückt. Aus der WO 2004/101239 ist ein Sicherheitssystem bekannt, bei dem in einer Gefahrensituation das Kreissägeblatt unter den Tisch gezogen wird oder der Antrieb vom Kreissägeblatt entkoppelt wird, um eine Abbremsung des Kreissägeblatts durch das Werkstück zu erzielen.

Aus US 9,702,916 B2 ist allgemein eine Sicherheitseinrichtung vorbekannt, die auch für Kreissägen eingesetzt werden soll. Dabei wird die Gefahrerkennung mittels einer Kalibrierung und SNR-Berechnung durchgeführt. Es werden bei Eintritt einer Gefahr die Deaktivierung des Motors und ein Schneidwerkzeugsperrmechanismus, um das Kreissägeblatt zu stoppen zeitgleich ergriffen.

Aus WO 2017 / 059 473 A1 ist ein Verfahren zur Detektion menschlichen Gewebes im Umfeld eines Werkzeugs mittels einer Erfassung einer periodischen Änderung der Kapazität bekannt.

Aus US 2016 / 0 279 754 A9 ist ein Sicherheitssystem für Kreissägen vorbekannt. Im Wege einer Aufzählung alternativer oder additionaler Detektionsmaßnahmen und Aktionsmaßnahmen ist ein Kontakt oder eine Nähe zum Sägeblatt als Detektionskriterium für eine Gefahrensituation und ein Sägeblattstopp und eine Sägeblattabsenkungals Aktionsmaßnahme bei einer Gefahrensituation beschrieben.

Aus WO 2016 / 145 157 A1 ist ein Sicherheitssystem für Kreissägen vorbekannt, bei dem mittels einer kapazitiven Messung die Erfassung eines Kontakts oder einer Annäherung eines Körperteils an das Sägeblatt erfolgt. Dabei wird bei einer Annäherung der Motor gestoppt, bei einem Kontakt aber eine pyrotechnische Bremsvorrichtung gezündet. Die Detektion des Gefahrenszustands erfolgt kapazitiv.

Aus WO 2015 / 091 245 A1 ist ein optisches Detektionssystem zur Erfassung von Hauttönen und daraus berechneter Annäherung von Körperteilen an das Sägeblatt bekannt. Als Reaktionsmechanismen wird das Stoppen oder Absenken des Sägeblatts beschrieben. Dabei erfolgt eine Detektion einer Gefahrensituation in Form einer Annäherung unter eine bestimmte Distanz oder einer Überschreitung einer bestimmten Annäherungsgeschwindigkeit als Auslösekriterium.

Aus US 2014 / 0 331 833 A1 ist ein Sicherheitssystem für Kreissägen vorbekannt, das auf einer kapazitiven Messung beruht und einen Kontakt oder eine Annäherung eines Körperteils an das Sägeblatt erfassen soll. Als Maschinenreaktion bei Auftritt einer Gefahrensituation ist ein Stopp der Schneidbewegung des Schneidwerkzeugs beschrieben. Als Gefahrensituation wird entweder die Annäherung oder der Kontakt eines Körperteils mit dem Schneidwerkzeug erfasst.

Aus US 2014 / 0 090 948 A1 ist die Ermittlung eines Gefahrenzustands bei Annäherung eines Körperteils an das Sägeblatt durch eine Temperaturerfassung mittels Infrarot vorbekannt. Es wird die Geschwindigkeit eines Objekts erfasst und diese Erfassung umfasst die Richtung der Bewegung und die Bewegungsrate. In Abhängigkeit dieser so erfassten Geschwindigkeit wird dann entschieden, ob der Antrieb deaktiviert wird oder ob eine Bremse aktiviert wird.

WO 2013 / 046 522 A1 beschreibt eine Überwachung eines Gefährdungsraums durch eine Dreifach-Sensoranordnung und das Stoppen des Sägeblatts, wenn ein Gegenstand in diesen Gefährdungsraum eindringt. Erfasst werden dabei nur Objekte, die elektromagnetische Wellen in bestimmter Weise reflektieren, als Beispiel wird ein RFID-Tag, der an einem distalen Ende des Daumens eines Arbeitshandschuhs befestigt ist, genannt. Ein Alarmsignal wird parallel zum Stoppen des Sägeblatts bei einer Gefährdungssituation ausgegeben.

WO 2014 / 164 964 A1 beschreibt die Erfassung eines Werkstücks, mit der Erfassung der Werkstoffart des Werkstücks, um daraus abgeleitet Schnittparameter zu optimieren. In Abhängigkeit von diesen Parametern wird dann die Drehzahl eines Kreissägeblatts geregelt. Das Werkstück wird mittels eines Materialsensors hinsichtlich seiner geometrischen Länge in Schnittrichtung erfasst und zum Ende des Schnitts wird die Drehzahl abgesenkt, um hierdurch eine Splitterbildung und damit verbundene Verletzungsgefahr des Bedieners zu verringern.

US 2011 / 0 226 105 A1 beschreibt verschiedene Sicherheitseinrichtungen an Kreissägen und behandelt dabei die Detektion einer Gefahrensituation als auch die Aktion bei einer Gefahrensituation. Dazu werden unterschiedliche Sensorsysteme, um Gefährdungssituationen zu erkennen offenbart und unterschiedliche Aktionen beschrieben, um Gefährdungssituationen zu vermeiden. Hierzu zählt das Anhalten des Sägeblatts, das Absenken des Sägeblatts, das Ausbilden eines Schutzschirms um das Sägeblatt (Airbag) sowie akustische oder optische Signale. In Figur 16 gezeigte Hebel, welche die Schneiden des Sägeblatts in Gefährdungssituationen abdecken sollen, scheinen technologisch bei bestehendem Eingriff des Werkzeugs in ein Werkstück keine zuverlässig wirksame Sicherheitseinrichtung darzustellen.

Aus US 2009 / 0 301 275 A1 ist die Erkennung eines menschlichen Körperteils mittels elektromagnetischer Wellen im Wellenbereich von 400nm-1.500nm und eine Vermeidung von Gefährdungssituationen durch Überdecken des Sägeblatts und Stoppen des Sägeblatts vorbekannt. Als auslösendes Ereignis beschreibt das Dokument die Erkennung der Hand in einem Gefährdungsbereich.

Aus DE 10 2007 062 996 A1 ist eine Sicherheitsvorrichtung für Kreissägen mit einem Stoppen oder Absenken des Kreissägeblatts vorbekannt. Die Gefährdungszustände werden erkannt, indem ein Körperteil und dessen Bewegungsrichtung in einem Gefährdungsbereich erkannt wird, andererseits wird die Beobachtung von zwei unterschiedlichen Bewegungen und deren Vergleich beschrieben.

DE 10 2008 001 727 A1 beschreibt grundsätzlich eine Schutzvorrichtung, die eine Detektion mittels Sensoren, insbesondere Abstandssensoren und eine Aktion durch Absenken des Sägeblatts in eine Schutzposition beschreibt.

DE 10 2009 054 491 A1 beschreibt eine Sicherheitsvorrichtung für Kreissägen, die auf einer Erkennung eines spezifisch ausgebildeten Handschuhs des Bedieners abstellt. Mit Hilfe der Erfassung einer elektromagnetischen Strahlung im UV-Bereich wird die Position dieses Handschuhs ermittelt und in Abhängigkeit des Eintretens in einen Gefährdungsbereich wird eine Abdeckung des Kreissägeblatts durch eine Schutzhaube ausgelöst.

DE 20 2010 004 458 U1 beschreibt ein Sicherheitssystem, bei dem im Bereich des Einlaufvorbaubereichs ein Sensorsystem Körperteile erfasst. Es wird eine nach einem Kriterium durchgeführte Erkennung der Gefährdungssituation beschrieben und zur Verhinderung einer Gefährdung wird als Aktion eine Abschirmung des Kreissägeblatts oder eine Absenkung des Sägeblatts unter den Tisch beschreiben.

DE 20 2011 101 566 U1 beschreibt eine Schnellabsenkungsvorrichtung für das Kreissägeblatt zur Vermeidung von Gefährdungssituationen.

Allerdings hat bislang keines dieser Systeme eine praktische Umsetzung und tatsächlich breitere Nutzung in Werkzeugmaschinen erreicht. Dies liegt nach Erkenntnis der Erfinder zum einen daran, dass jede Art von Werkzeugmaschine eine eigene Art und eigene Umstände der Entstehung von Gefahrensituationen hat und dadurch auch eigene Prinzipien zur Vermeidung der Gefahrensituation erfordert. Zum anderen ist - jenseits etwaiger von Berufsverbänden oder durch gesetzliche Bestimmungen erfolgender Vorgaben die Akzeptanz von Sicherheitssystemen der vorbekannten Systematik und Struktur bei den Anwendern und Nutzern von Werkzeugmaschinen nicht ausreichend hoch. Dies liegt nach Erkenntnis der Erfinder nur teilweise daran, dass der damit verbundene Nutzen nicht höher gewertet wird als die damit verbundenen Investitionskosten. Eine wesentliche Ursache ist die mangelnde Ergonomie der bislang bekannten Systeme, für die insbesondere eine Erschwerung und Verkomplizierung der Arbeitsabläufe auf den Werkzeugmaschinen erwartet wird. Dies ist aber in Zeiten eines hohen Effizienzanspruchs an die Bearbeitung auf solchen Werkzeugmaschinen ein schwerwiegender Nachteil.

Neben diesen ergonomischen Problemen, die mit der Systemstruktur zusammenhängen, weisen die vorbekannten Systeme jedoch nach wie vor auch Nachteile auf, die eine unzureichende Funktion und Sicherheitswirkung selbst dann nach sich ziehen, wenn das System installiert und vom Benutzer aktiviert ist. Ein erstes Problem bestehender Systeme besteht darin, dass die Zeit, innerhalb der die Schneidwirkung am Gefährdungsort unterbunden werden kann, nicht ausreicht, um bei schnellen Vorschubgeschwindigkeiten des Werkstücks und damit der Hand des Benutzers relativ zum Kreissägeblatt eine schwerwiegende Verletzung zu vermeiden. Die bekannten Vorrichtungen weisen weiterhin den Nachteil auf, dass sie nur bei dem Schneiden elektrisch isolierender Werkstücke funktionieren, nicht jedoch beim Schneiden elektrisch leitender Werkstoffe, wie beispielsweise Leichtmetallen oder dergleichen. Ein weiterer Nachteil der bekannten Vorrichtungen ist, dass diese im Falle des Eintritts von Sondersituationen meist nicht die gewünschte Schutzwirkung entfalten, da die Zeit zur Entfaltung der Schutzwirkung meist zu langwierig ist.

Darüber hinaus wirkt sich bei bekannten Vorrichtungen nachteilig aus, dass das Kreissägeblatt durch den schlagartigen Abbremsvorgang beschädigt werden kann. Aus dem Kreissägeblatt herausbrechende Fragmente, sei es beim Bremsvorgang selbst oder in Folge einer beim Bremsvorgang verursachten Vorschädigung und dem darauf folgenden weiteren Benutzen des vorbeschädigten Kreissägeblatts, erzeugen dann eine zusätzliche potentielle Verletzungsquelle. Zudem sind solche Systeme mit Beschädigung des Kreissägeblatts bei Auslösung zwar dann, wenn sie tatsächlich eine schwere Verletzung vermeiden, akzeptiert, jedoch wirken sich Fehlauslösungen ungünstig aus, da sie zum Ersatz des teuren Sägeblatts führen und daher die Akzeptanz des Systems herabsetzen.

Eine Vielzahl von Gefährdungssituationen für Personen entsteht unerwartet. Darüber hinaus gibt es Gefährdungssituationen mit Verletzungspotenzial, die äußert schnell entstehen. Eine Reaktionszeit zur Vermeidung von Verletzungen ist demnach kurz, so dass Sicherheitsvorrichtungen teilweise innerhalb von Zehntel- oder auch Millisekunden Sicherheitsmaßnahmen einleiten müssen, um eine Verletzung einer Person wirksam zu vermeiden.

Es ist daher eine Aufgabe der vorliegenden Erfindung, eine Formatkreissäge und ein computerimplementiertes Verfahren bereitzustellen, welche ein oder mehrere der genannten Nachteile vermindern oder beseitigen. Insbesondere ist es eine Aufgabe der Erfindung, eine Lösung bereitzustellen, welche zuverlässig auch bei industriell genutzten Formatkreissägen Personen vor Verletzungen durch das Kreissägeblatt schützt. Darüber hinaus ist es eine Aufgabe der vorliegenden Erfindung, eine Lösung bereitzustellen, die bei hohem Schutz vor Verletzungen von Körperteilen eine kostengünstige und konstruktiv einfache Lösung ermöglicht.

Sicherheitseinrichtungen, die Gefährdungszustände wirksam vermeiden sollen, müssen nach Erkenntnis der Erfinder solcherart gestaltet sein, dass sie den normalen Arbeitsablauf nicht oder möglichst wenig beeinträchtigen und Fehlauslösungen vermeiden oder zumindest solche Fehlauslösungen vermeiden, die zu Beschädigungen an Maschine oder Sägeblatt führen können, da ansonsten die Akzeptanz durch den Benutzer nicht gegeben ist, was dazu führt, das die Sicherheitseinrichtung entweder - da nicht vorgeschrieben - gar nicht erst gewünscht und bestellt wird, oder nachträglich wieder entfernt oder stillgelegt wird.

Gemäß einem ersten Aspekt der vorliegenden Erfindung wird die eingangs genannte Aufgabe gelöst durch eine Formatkreissäge, insbesondere zur Bearbeitung von Holz- und/oder Kunststoffmaterialien, umfassend eine Werkstückauflagefläche mit einem Sägeschlitz, ein Sägeaggregat mit einem Kreissägeblatt, das eine Vielzahl an Sägezähnen zum Bearbeiten von Werkstücken aufweist, wobei das Kreissägeblatt an dem Sägeaggregat unterhalb der Werkstückauflagefläche drehbar gelagert ist und in einem Sägebetriebsmodus durch den Sägeschlitz hindurchragt, eine Detektionsvorrichtung zur Erkennung mindestens eines Gefährdungszustandes für ein menschliches Körperteil durch das Sägeblatt, eine Sicherheitsvorrichtung zur Vermeidung von Verletzungen eines menschlichen Körperteils durch das Kreissägeblatt mittels einer Sicherheitsmaßnahme, und eine Steuerungsvorrichtung, welche mit der Detektionsvorrichtung und der Sicherheitsvorrichtung signaltechnisch gekoppelt ist, wobei die Steuerungsvorrichtung angeordnet und ausgebildet ist, in Folge einer Erkennung des mindestens einen Gefährdungszustandes mittels der Detektionsvorrichtung, eine Sicherheitsmaßnahme mittels der Sicherheitsvorrichtung einzuleiten.

Der Erfindung liegt die Erkenntnis zugrunde, dass im Umfeld einer Formatkreissäge unterschiedlichste Gefährdungszustände eintreten können. Darüber hinaus wurde erkannt, dass die Vielzahl an Gefährdungszuständen häufig lediglich mehrdimensional beschrieben werden können. Einflussgrößen auf den Gefährdungszustand für ein menschliches Körperteil sind beispielsweise die Entfernung des menschlichen Körperteils vom Kreissägeblatt, die Richtung des menschlichen Körperteils im Vergleich zum Kreissägeblatt sowie die Geschwindigkeit und Beschleunigung des menschlichen Körperteils.

Eine eindimensionale Beschreibung eines Gefährdungszustandes beispielsweise mittels einer Geschwindigkeit eines Körperteils oder eines Abstands zum Kreissägeblatt ist meistens nicht zielführend. Beispielsweise kann selbst bei geringstem Abstand eines Körperteils von dem Kreissägeblatt lediglich ein Gefährdungszustand entstehen, der eine geringe Verletzungsgefahr aufweist, da das Körperteil kontrolliert mit gleichbleibender Geschwindigkeit an dem Kreissägeblatt vorbei geführt wird. Anderseits kann die gleiche Situation eine sehr hohe Verletzungsgefahr aufweisen, beispielsweise wenn sich ein Körperteil mit hoher Geschwindigkeit und hoher Beschleunigung in Richtung des Kreissägeblatts bewegt. Infolgedessen wurde erkannt, dass die mehrdimensionale Beschreibung und Erfassung von Gefährdungszuständen vorteilhaft ist.

Die Werkstückauflagefläche mit dem Sägeschlitz ist im Betriebsmodus insbesondere als eine im Wesentlichen horizontal ausgerichtete Fläche zu verstehen. Die Werkstückauflagefläche kann eine vollständig ebene Oberfläche sein oder auch Transporthilfselemente umfassen, wie beispielsweise Luftdüsen oder -rollen, die ein Bewegen eines Werkstückes über die Werkstückauflagefläche vereinfachen. Der Sägeschlitz weist eine Erstreckung in Längsrichtung und in Breitenrichtung auf. Die Längsrichtung des Sägeschlitzes ist vorzugsweise derart ausgerichtet, dass ein Kreissägeblatt derart durch den Sägeschlitz hindurchragen kann, dass ein Werkstück in Vorschubrichtung auf eine Umfangsseite des Kreissägeblatts zubewegt werden kann und das Kreissägeblatt das Werkstück an einer definierten Stelle mit seiner Umfangsseite teilt.

Das Kreissägeblatt ist an dem Sägeaggregat drehbar gelagert, wobei das Kreissägeblatt eine Vielzahl an Sägezähnen zum Bearbeiten von Werkstücken aufweist. Das Sägeaggregat umfasst vorzugsweise ein, zwei oder mehr weitere Elemente, die Bewegungsrichtungen des Kreissägeblatts ausführen und/oder ermöglichen, indem diese beispielsweise antreibend in unterschiedliche Raumrichtungen wirken, wobei vorzugsweise rotierende und translatorische Bewegungen ermöglicht werden. Das Kreissägeblatt ist an dem Sägeaggregat drehbar gelagert, wobei der Lagerpunkt unterhalb der Werkstückauflagefläche angeordnet ist.

Darüber hinaus umfasst die Formatkreissäge eine Detektionsvorrichtung zur Erkennung mindestens eines Gefährdungszustandes für ein menschliches Körperteil durch das Kreissägeblatt. Die Detektionsvorrichtung umfasst vorzugsweise eine Vorrichtung zur Aufnahme einer Ist-Situation. Dies kann bzw. können beispielsweise eine übliche Bildkamera, eine Wärmebildkamera und/oder kapazitative Sensoren sein. Darüber hinaus umfasst die Detektionsvorrichtung vorzugsweise eine Vorrichtung zur Auswertung der aufgenommenen Ist-Situation. Mittels der Aufnahme der Ist-Situation und der Erkennung von Gefährdungszuständen für ein menschliches Körperteil auf Basis dieser Ist-Situation, können systemtechnisch Gefährdungszustände erfasst und ausgewertet werden.

Um erkannte Gefährdungszustände im Sinne der Erfindung nutzbar zu machen, umfasst die Formatkreissäge eine Sicherheitsvorrichtung zur Vermeidung von Verletzungen eines menschlichen Körperteils durch das Kreissägeblatt mittels einer Sicherheitsmaßnahme. Die Sicherheitsvorrichtung ist insbesondere derart angeordnet und ausgebildet, dass diese das Gefährdungspotenzial des Kreissägeblatts aus dem Erfassungsradius des menschlichen Körperteils herausnimmt. Dies kann entweder dadurch realisiert werden, dass das Kreissägeblatt entfernt wird oder dass das vorhandene Kreissägeblatt kein oder stark vermindertes Gefährdungspotenzial für ein menschliches Körperteil darstellt.

Die Formatkreissäge umfasst demnach eine Vorrichtung zur Vermeidung von Verletzungen eines menschlichen Körperteils, der Sicherheitsvorrichtung, und eine Vorrichtung zur Erkennung eines Gefährdungszustandes für ein menschliches Körperteil, der Detektionsvorrichtung. Die Detektionsvorrichtung und die Sicherheitsvorrichtung sind ferner mit einer Steuerungsvorrichtung signaltechnisch gekoppelt. Die Steuerungsvorrichtung ist insbesondere angeordnet und ausgebildet, um bei Erkennung eines Gefährdungszustandes eine Sicherheitsmaßnahme mittels der Sicherheitsvorrichtung einzuleiten.

Vorzugsweise erkennt die Detektionsvorrichtung unterschiedliche Gefährdungszustände. Insbesondere ist es bevorzugt, dass die Steuerungsvorrichtung und/oder die Detektionsvorrichtung einen Gefährdungszustand bewerten, insbesondere in Bezug auf das potenzielle Verletzungsrisiko. Beispielsweise ist das Verletzungsrisiko für ein menschliches Körperteil besonders hoch, wenn das menschliche Körperteil bereits einen geringen Abstand zu dem Kreissägeblatt aufweist, sich unmittelbar in die Richtung des Kreissägeblatts bewegt und darüber hinaus eine hohe Beschleunigung und/oder Geschwindigkeit in Richtung des Kreissägeblatts aufweist. Auf der anderen Seite ist ein geringeres Verletzungsrisiko vorhanden, wenn ein menschliches Körperteil lediglich mit geringer Geschwindigkeit und/oder geringer Beschleunigung in eine Richtung des Kreissägeblatts bewegt wird. Hier ist es besonders bevorzugt, dass die Steuerungsvorrichtung eine situationsadäquate Sicherheitsmaßnahme einleitet.

In einer besonders bevorzugten Ausführungsvariante der Formatkreissäge ist vorgesehen, dass die Sicherheitsvorrichtung angeordnet und ausgebildet ist, eine Sicherheitsmaßnahme auszuführen, wobei die Sicherheitsmaßnahme aus zwei oder mehreren verfügbaren Sicherheitsmaßnahmen ausgewählt wird, wobei vorzugsweise die Steuerungsvorrichtung ausgebildet ist, die Sicherheitsmaßnahme situationsabhängig und/oder zeitversetzt einzuleiten. Eine situationsbedingte und/oder zeitversetzte Einleitung von Sicherheitsmaßnahmen kann der Realisierung verschiedener Eskalationsstufen dienen. Eskalationsstufen können beispielsweise den Einflussfaktor der Entfernung des menschlichen Körperteils von dem Kreissägeblatt berücksichtigen. Insbesondere bei geringer Geschwindigkeit und geringer Beschleunigung kann die Entfernung des menschlichen Körperteils zum Kreissägeblatt der einzige Einflussfaktor für die Eskalationsstufen sein.

Beispielsweise kann bei dem Schneiden von kleinen Werkstücken trotz Nutzung von Schiebestöcken eine geringe Entfernung zwischen Hand und Kreissägeblatt entstehen. Dennoch ist bei fachmännischem Vorgehen lediglich ein Gefährdungszustand vorhanden, der ein geringes Verletzungsrisiko beinhaltet. In diesem Fall ist es unerwünscht, dass bereits alle zur Verfügung stehenden Sicherheitsmaßnahmen eingeleitet werden, die gegebenenfalls auch zur Beschädigung der Formatkreissäge, beispielsweise des Kreissägeblatts, führen können. Daher ist es insbesondere bevorzugt, dass verschiedene Sicherheitsmaßnahmen, insbesondere in Anbetracht vorhandener Eskalationsstufen, entweder zeitversetzt oder situationsabhängig eingeleitet werden.

Gemäß einer weiteren bevorzugten Ausführungsvariante ist vorgesehen, dass die Sicherheitsvorrichtung eine Benutzerschnittstelle aufweist, die angeordnet und ausgebildet ist, einem Benutzer ein akustisches und/oder optisches Warnsignal als Sicherheitsmaßnahme auszugeben. Ein akustisches und/oder optisches Warnsignal ist insbesondere eine Sicherheitsmaßnahme für einen Gefährdungszustand, der ein sehr geringes Verletzungsrisiko beinhaltet. Ein akustisches und/oder optisches Warnsignal kann beispielsweise für einen Gefährdungszustand ausgegeben werden, der einen zu geringen Abstand eines menschlichen Körperteils zu dem Kreissägeblatt aufweist, wobei die Geschwindigkeiten und Beschleunigungen des menschlichen Körperteils als gering eingestuft werden, woraus sich lediglich ein geringes Verletzungsrisiko ergibt.

Das akustische Warnsignal kann beispielsweise durch einen Lautsprecher ausgegeben werden, wobei das akustische Warnsignal vorzugsweise derart ausgebildet ist, dass eine Person und/oder ein Bediener dieses auch als Warnsignal vernimmt. Dies kann insbesondere durch intensive, höherfrequente Laute erreicht werden, die darüber hinaus periodisch moduliert werden können. Das optische Warnsignal kann beispielsweise als Leuchtsignal, insbesondere durch eine Leuchtdiode, ausgegeben werden. Insbesondere wird das optische Warnsignal in einem Sichtbereich eines Bedieners und/oder einer Person ausgegeben. Beispielsweise kann das optische Warnsignal auf einem Monitor, und/oder einer Schutzhaube, und/oder auf der Werkstückauflagefläche ausgegeben werden.

Eine weitere bevorzugte Fortbildung der Formatkreissäge zeichnet sich dadurch aus, dass die Sicherheitsvorrichtung angeordnet und ausgebildet ist, eine Drehzahl des Kreissägeblattes als Sicherheitsmaßnahme zu reduzieren. Die Reduktion der Drehzahl des Kreissägeblattes resultiert zunächst darin, dass das Gefährdungspotenzial des Kreissägeblatt mit geringerer Drehzahl ebenfalls geringer ist. Kreissägeblätter von Formatkreissägen drehen mit einer hohen Drehzahl, wobei insbesondere Schnittgeschwindigkeiten zwischen 60 und 100 m/s bevorzugt sind. Infolgedessen und in Abhängigkeit des Durchmessers des Kreissägeblatts ergeben sich beispielsweise Drehzahlen von um die 4.000-6.000 Umdrehungen pro Minute. Wird diese Betriebsdrehzahl reduziert, reduziert sich auch das Gefährdungspotenzial.

Darüber hinaus wird dadurch ein Bediener dazu bewegt, erforderliche Sicherheitsstandards, wie beispielsweise dem Abstand seiner Hand zu dem Kreissägeblatt einzuhalten, um wieder mit der gewünschten Drehzahl arbeiten zu können. Die Reduktion der Drehzahl des Kreissägeblattes erfolgt insbesondere durch Ansteuerung eines Antriebs des Kreissägeblatts. Darüber hinaus kann die Reduktion der Drehzahl des Kreissägeblattes alternativ oder zusätzlich durch eine Ansteuerung einer Bremsvorrichtung erfolgen.

Die Reduktion der Drehzahl des Kreissägeblattes kann in einem Bereich von kleiner 5% der Betriebsdrehzahl bis hin zu 100% der Betriebsdrehzahl reichen. Insbesondere ist es bevorzugt, dass Reduktionsstufen hinterlegt werden, wobei diese beispielsweise in der Steuerungsvorrichtung hinterlegt werden können. Insbesondere ist es bevorzugt, dass zwei oder mehr Reduktionsstufen festgelegt werden. Die Reduktionsstufen umfassen jeweils eine prozentuale Reduktion der Drehzahl des Kreissägeblattes. Mit steigendem Verletzungspotenzial eines Gefährdungszustandes kann eine Reduktionsstufe mit stärkerer Reduktion der Drehzahl des Kreissägeblattes eingeleitet werden.

Ferner ist vorzugsweise vorgesehen, dass die Sicherheitsvorrichtung eine Speichereinheit für ein Entschärfungselement und eine Ausgabevorrichtung zum Ausgeben des Entschärfungselements umfasst, wobei die Ausgabevorrichtung so angeordnet und ausgebildet ist, um das Entschärfungselement aus der Speichereinheit in Richtung des Kreissägeblattes als Sicherheitsmaßnahme auszugeben. Das Entschärfungselement dient der Materialzufuhr auf das Kreissägeblatt. Dem Kreissägeblatt wird somit das Entschärfungselement zugeführt, sodass insbesondere die Zwischenräume zwischen den Sägezähnen und die Sägezähne an sich umhüllt und/oder bedeckt sind. Insbesondere ist es bevorzugt, dass das Entschärfungselement derart in Richtung des Kreissägeblattes ausgegeben wird, dass ein Spanraum und/oder eine Spanfläche und/oder eine Freifläche von dem Entschärfungselement bedeckt und/oder umhüllt sind. Darüber hinaus kann es bevorzugt sein, dass das Entschärfungselement derart ausgegeben wird, dass dieses eine Zahnbrust und/oder einen Zahnrücken bedeckt und/oder umhüllt.

Das Entschärfungselement kann ferner durch ein, zwei oder mehrere Entschärfungselementteile gebildet werden. Beispielsweise kann das Entschärfungselement als Schnur ausgebildet sein und somit als ein einzelnes Elementteil in Richtung des Kreissägeblattes ausgegeben werden. Darüber hinaus kann das Entschärfungselement auch zwei oder mehrere Geometrien aufweisen, sodass zwei oder mehrere Elementteile ausgegeben werden. In Folge der Ausgabe des Entschärfungselementes wird das Gefährdungspotenzial des Kreissägeblattes vermindert oder beseitigt.

Das Kreissägeblatt kann beispielsweise bei entsprechender Anordnung des Entschärfungselementes eine im Wesentlichen nicht gefährdende, glatte Oberfläche in Umfangsrichtung aufweisen, mit der ein Schnitt in ein menschliches Körperteil nicht oder nur noch stark vermindert möglich ist. Ein an diesem Kreissägeblatt mit Entschärfungselement angeordnetes menschliches Körperteil kann zwar weiterhin durch die entstehende Reibung zwischen Hand und Entschärfungselement gefährdet werden, wobei diese Gefährdung als deutlich geringer einzuschätzen ist, als die Gefährdung durch ein Kreissägeblatt mit Sägezähnen. Das Entschärfungselement kann insbesondere als Füllmittel, und/oder Spanraumfüllmittel, und/oder Schneidumhüllungsmittel ausgebildet sein.

Eine weitere besonders bevorzugte Ausführungsvariante der Formatkreissäge sieht vor, dass die Ausgabevorrichtung angeordnet und ausgebildet ist, das Entschärfungselement in einer werkstückbezogenen Vorschubrichtung vor und/oder hinter dem Kreissägeblatt auszugeben, und/oder die Ausgabevorrichtung angeordnet und ausgebildet ist, das Entschärfungselement in einem Bereich unterhalb der Werkstückauflagefläche auszugeben, und/oder die Ausgabevorrichtung zumindest teilweise von dem Spaltkeil umfasst wird, und das Entschärfungselement vorzugsweise am Spaltkeil ausgegeben wird.

In werkstückbezogener Vorschubrichtung vor dem Kreissägeblatt bedeutet insbesondere, dass an diesem Punkt noch kein Schnitt an einem Werkstück vollzogen wurde. In werkstückbezogener Vorschubrichtung hinter dem Kreissägeblatt bedeutet insbesondere, dass das Werkstück an dieser Stelle bereits getrennt wurde. Die Ausgabe des Entschärfungselements in der werkstückbezogenen Vorschubrichtung vor und/oder hinter dem Kreissägeblatt hat insbesondere den Vorteil, dass die Ausgaberichtung im Wesentlichen unabhängig von einem Durchmesser des Kreissägeblattes und/oder einer Position des Kreissägeblattes ist.

Eine Ausgabe des Entschärfungselements in einem Bereich unterhalb der Werkstückauflagefläche hat unter anderem den Vorteil, dass die Ausgabe nicht durch ein Werkstück oder gar ein menschliches Körperteil behindert wird. Eine Ausgabe des Entschärfungselementes durch eine Ausgabevorrichtung, die zumindest teilweise von dem Spaltkeil umfasst wird, hat insbesondere den Vorteil, dass die Ausgabe des Entschärfungselementes kreissägeblattnah erfolgt. Dadurch kann eine schnelle Entschärfung des Kreissägeblattes mit dem Entschärfungselement erfolgen. Darüber hinaus ist der Spaltkeil bei einem Großteil der Formatkreissägen ohnehin vorhanden, sodass keine bedeutenden Umbaumaßnahmen an der Formatkreissäge erforderlich sind.

In einer weiteren bevorzugten Ausführungsvariante der Formatkreissäge ist vorgesehen, dass das Entschärfungselement ein festes und/oder aushärtendes und/oder fließfähiges Material ist, vorzugsweise ein aushärtender und/oder viskoelastischer Kunststoff ist, insbesondere als eine Kunststoffschnur oder eine Vielzahl von Partikeln ausgebildet ist, und die Ausgabevorrichtung angeordnet und ausgebildet ist, um das Entschärfungselement so auszugeben, dass die Sägezähne des Kreissägeblatts von dem Entschärfungselement umhüllt werden.

Ein Kunststoff als Entschärfungselement hat insbesondere den Vorteil, dass dieser gut förderbar und ausgebbar ist. Darüber hinaus kann Kunststoff je nach Wahl der Zusammensetzung derart ausgeführt werden, dass sich dieser in besonders vorteilhafter Weise um die Sägezähne des Kreissägeblattes legt und diese somit bedeckt und/oder umhüllt. Ein flüssiger oder aushärtender Kunststoff kann insbesondere dahingehend bevorzugt eingesetzt werden, dass dieser unmittelbar nach Auftreffen auf das Kreissägeblatt ausgehärtet wird und somit eine sichere Schutzschicht ausbilden kann. Auch ausgehärteter Kunststoff kann bei entsprechender Ausbildung, beispielsweise als Kunststoffschnur oder als grobfaseriger Kunststoffstrang Vorteile mit sich bringen, wobei insbesondere die schnelle und sichere Anordnung des Entschärfungselements vorteilhaft ist.

Gemäß einer weiteren besonders bevorzugten Ausführungsvariante der Formatkreissäge ist vorgesehen, dass diese eine Schutzhaube mit einem Schutzhaubengehäuse umfasst, das einen Schutzhaubeninnenraum umschließt und das Kreissägeblatt in dem Sägebetriebsmodus teilweise in dem Schutzhaubeninnenraum aufnimmt, wobei die Ausgabevorrichtung derart an der Schutzhaube angeordnet und ausgebildet ist, um das Entschärfungselement innerhalb des Schutzhaubeninnenraums auf das Kreissägeblatt aufzubringen.

Oberhalb der Werkstückauflagefläche führen die Sägezähne eine Bewegungsrichtung mit einem Bewegungsanteil aus, der in eine entgegengesetzte Richtung zum Vorschub des Werkstücks gerichtet ist. Infolgedessen ist es insbesondere bevorzugt, das Entschärfungselement über eine Ausgabevorrichtung an der Schutzhaube auszugeben, da das Entschärfungselement besonders schnell in einem Gefährdungsbereich bringbar ist.

Darüber hinaus ist eine Ausgabevorrichtung an der Schutzhaube bevorzugt, da diese Anordnung konstruktiv besonders einfach ist. Darüber hinaus kann mittels einer derartigen Anordnung auch ein Nachrüsten der Ausgabevorrichtung in besonders einfacher Weise ermöglicht werden. Darüber hinaus ist der zur Verfügung stehende Raum innerhalb einer Schutzhaube, wie auch in der Haltevorrichtung von Schutzhauben, weniger stark limitiert als innerhalb des Maschinengrundgestells der Formatkreissäge. Die Ausgabevorrichtung weist vorzugsweise eine Speichereinheit für das Entschärfungselement auf, die an der Schutzhaube angeordnet sein kann. Alternativ oder ergänzend kann eine derartige Speichereinheit auch entfernt von der Schutzhaube angeordnet sein, wobei die Schutzhaube vorzugsweise mit der Speichereinheit über eine Entschärfungselementleitung verbunden ist.

Eine weitere bevorzugte Fortbildung der Formatkreissäge zeichnet sich dadurch aus, dass diese ein Abschirmelement umfasst, wobei das Abschirmelement angeordnet und ausgebildet ist, um in einer Abschirmstellung im Bereich oberhalb der Werkstückauflagefläche, die Sägezähne in radialer Richtung in Bezug auf die Drehachse des Kreissägeblatts zumindest abschnittsweise abzuschirmen.

Die abschnittsweise Abschirmung des Kreissägeblattes mittels des Abschirmelements ist insbesondere derart angeordnet und ausgebildet, dass weiterhin ein Werkstück mittels des Kreissägeblattes geschnitten werden kann. Daher ist es bevorzugt, dass das Abschirmelement lediglich abschnittsweise das Kreissägeblatt abschirmt. Insbesondere ist es bevorzugt, dass das Abschirmelement das Kreissägeblatt ausgehend von einer in Vorschubrichtung des Werkstücks hinter dem Kreissägeblatt verorteten Stelle in Umfangsrichtung abschirmt. Ausgehend von dieser Stelle bis zu einem Ende des Abschirmelements umschliesst das Abschirmelement den Umfang des Kreissägeblattes in Umfangsrichtung mit einem Abschirmwinkel. Der Abschirmwinkel ist vorzugsweise kleiner 175°, 170°, 160°, 150°, 120° oder 90°.

Das Abschirmelement weist vorzugsweise oberhalb der Werkstückauflagefläche eine in radialer Richtung konstante Beabstandung zu dem Kreissägeblatt auf. Die Beabstandung des Abschirmelementes zu dem Kreissägeblatt ist erforderlich, um eine Schneidwirkung des Kreissägeblattes gewährleisten zu können ohne dass das Abschirmelement beschädigt wird. Insbesondere ist es bevorzugt, dass in der Abschirmstellung im Bereich oberhalb der Werkstückauflagefläche zwischen einem Innenumfang des Abschirmelements und dem Außendurchmesser des Kreissägeblatts in radialer Richtung des Kreissägeblatts ein Abstand von kleiner 2 mm, 5 mm, 10 mm, 15 mm, 20 mm, oder 50 mm besteht.

Die Abstände des Kreissägeblattes in radialer Richtung von dem Innenumfang des Abschirmelementes sind in der Regel in Abhängigkeit des Durchmessers des Kreissägeblattes. Insbesondere ist es bevorzugt, einen Abstand zu wählen, mit dem eine Vielzahl von in Bezug auf den Durchmesser unterschiedlichen Kreissägeblättern eingesetzt werden können.

Es ist ferner bevorzugt, dass das Abschirmelement die Sägezähne in radialer Richtung und/oder in axial seitlicher Richtung in Bezug auf die Drehachse des Kreissägeblatts umschließt.

Das Umschließen der Sägezähne in radialer Richtung durch das Abschirmelement erfolgt insbesondere dadurch, dass das Abschirmelement in radialer Richtung beabstandet zu dem Kreissägeblatt angeordnet ist. Eine in axial seitlicher Richtung vorhandene Abschirmung erfolgt dadurch, dass das Abschirmelement beispielsweise eine Nut aufweist, wobei die Nut Seitenflächen aufweist, die im Betriebszustand in axialer seitlicher Richtung von dem Kreissägeblatt beabstandet sind. Durch die axial seitliche Umschließung des Kreissägeblattes erfolgt eine Erhöhung des Schutzes durch das Abschirmelement.

Ferner ist es bevorzugt, dass das Abschirmelement eine ringförmige Geometrie aufweist. Insbesondere ist es bevorzugt, dass das Abschirmelement eine teilringförmige Geometrie aufweist. Darüber hinaus kann es bevorzugt sein, dass ein Radius der ringförmigen oder teilringförmigen Geometrie veränderbar ausgebildet ist. Dies hat insbesondere den Vorteil, dass das Abschirmelement an unterschiedliche Durchmesser von Kreissägeblättern angepasst werden kann.

Ferner ist es bevorzugt, dass das Abschirmelement in einer Sägebetriebsmodus-Stellung im Wesentlichen unterhalb der Werkstückauflagefläche angeordnet ist, und/oder das Abschirmelement in der Sägebetriebsmodus-Stellung einen in werkstückbezogener Vorschubrichtung hinter dem Kreissägeblatt angeordneten Spaltkeil aufweist.

Eine weitere bevorzugte Fortbildung der Formatkreissäge zeichnet sich ferner dadurch aus, dass das Abschirmelement derart angeordnet und ausgebildet ist, dass dieses in im Wesentlichen tangentialer Richtung des Kreissägeblatts bewegbar ist, wobei eine Drehachse dieser Bewegung vorzugsweise parallel, insbesondere koaxial, zur Drehachse des Kreissägeblatts ausgerichtet ist.

Diese Fortbildung ist insbesondere dahingehend vorteilhaft, dass das Abschirmelement im Betriebsmodus ohne Gefährdungszustand kein Hindernis darstellt. Insbesondere ist es bevorzugt, dass sich das Abschirmelement in der Abschirmstellung von einem Austrittspunkt an der Werkstückauflagefläche, welcher vorzugweise fluchtend mit dem Sägeschlitz angeordnet ist, in tangentialer Richtung des Kreissägeblattes zu einem Endpunkt, welcher vorzugsweise fluchtend mit dem Sägeschlitz angeordnet ist, erstreckt. Darüber hinaus kann es bevorzugt sein, dass der Austrittspunkt in werkstückbezogener Vorschubrichtung hinter dem Kreissägeblatt und/oder der Endpunkt in werkstückbezogener Vorschubrichtung vor dem Kreissägeblatt angeordnet ist. Darüber hinaus kann es bevorzugt sein, dass das Abschirmelement einen Teil des Spaltkeiles ausbildet und/oder von dem Spaltkeil umfasst wird.

In einer weiteren besonders bevorzugten Ausführungsvariante der Formatkreissäge ist vorgesehen, dass das Abschirmelement einen ersten Abschnitt und einen zweiten Abschnitt aufweist, wobei der zweite Abschnitt bewegbar, insbesondere schwenkbar, an dem ersten Abschnitt angeordnet ist, wobei der zweite Abschnitt vorzugsweise um eine horizontale Achse, die insbesondere parallel zur Rotationsachse des Sägeblatts verläuft, bewegbar, insbesondere schwenkbar, ist.

Der erste Abschnitt des Abschirmelements ist vorzugsweise relativ zum Kreissägeblatt unbewegbar angeordnet. Insbesondere ist der erste Abschnitt in Bezug auf das Kreissägeblatt in tangentialer Richtung im Wesentlichen unbewegbar angeordnet. Es ist ferner bevorzugt, dass der erste Abschnitt des Abschirmelements in einer werkstückbezogenen Vorschubrichtung hinter dem Kreissägeblatt angeordnet ist. Ferner ist eine Breite des ersten Abschnitts des Abschirmelements derart ausgebildet, dass diese in Richtung der Rotationsachse des Kreissägeblattes eine Breite des Spaltkeils nicht überschreitet.

Der zweite Abschnitt des Abschirmelementes ist vorzugsweise derart bewegbar an dem ersten Abschnitt angeordnet, dass ein auf den zweiten Abschnitt zu bewegtes Werkstück den zweiten Abschnitt derart bewegt, dass ein Schneiden des Werkstückes ermöglicht wird. Vorzugsweise wird der zweite Abschnitt durch das Werkstück nach oben geschwenkt. Zu diesem Zweck ist der zweite Abschnitt vorzugsweise schwenkbar an dem ersten Abschnitt angeordnet. Ferner vorzugsweise ist der zweite Abschnitt derart angeordnet und ausgebildet, dass dieser stets zumindest eine geringe Kraft in vertikaler Richtung auf das Werkstück ausübt.

Darüber hinaus ist es bevorzugt, dass der zweite Abschnitt derart an dem ersten Abschnitt angeordnet ist, dass dieser in tangentialer Richtung verschiebbar ist. Diese Verschiebbarkeit ist insbesondere derart ausgebildet, dass ein auf das Abschirmelement zu bewegtes Werkstück geschnitten werden kann und durch die Bewegung des Werkstückes der zweite Abschnitt in tangentialer Richtung von der Werkstückauflagefläche hinwegbewegt wird.

Gemäß einer weiteren besonders bevorzugten Ausführungsvariante der Formatkreissäge ist vorgesehen, dass das Kreissägeblatt an dem Sägeaggregat angeordnet ist, und dass das Kreissägeblatt derart absenkbar an dem Sägeaggregat angeordnet ist, dass dieses in einem Schutzmodus vollständig unterhalb der Werkstückauflagefläche angeordnet ist.

Das Kreissägeblatt ist am Sägeaggregat drehbar um eine Kreissägeblattachse gelagert und das Sägeaggregat ist vorzugsweise um eine sich in Sägerichtung erstreckende Schwenkachse schwenkbar, um beispielsweise Gehrungsschnitte auszuführen. Ein unter der Werkstückauflagefläche angeordnetes Kreissägeblatt übt kein Gefährdungspotenzial auf sein Umfeld aus. Somit ermöglicht ein derartiges Sägeaggregat, die sichere Handhabung der Formatkreissäge. Zur Absenkung des Sägeblatts können separate Aktuatoren, beispielsweise elastisch vorgespannte Aktuatoren oder mit Explosivstoff betätigte Aktuatoren zum Einsatz kommen. Zusätzlich oder alternativ kann eine Bremsvorrichtung vorgesehen sein, die ausgebildet ist, um die in der Rotation des Sägeblatts gespeicherte Energie durch Abbremsen in eine Absenkkraft des Sägeblatts umzusetzen.

Ferner ist vorzugsweise vorgesehen, dass die Detektionsvorrichtung als Bilderkennungsvorrichtung ausgebildet ist oder diese umfasst und vorzugsweise mindestens einen kapazitativen Sensor und/oder mindestens einen Infrarotsensor aufweist, und/oder eine Bildauswerteeinheit umfasst, wobei die Bildauswerteeinheit vorzugsweise von der Detektionsvorrichtung umfasst wird.

Mittels der Bilderkennungsvorrichtung kann eine Differenzierung zwischen Werkstücken und menschlichen Körperteilen durch Bildverarbeitung erfolgen und folglich die Annäherung eines menschlichen Körperteils an das Kreissägeblatt oder das Eintreten eines Gefährdungszustandes erkannt werden. Ein kapazitativer Sensor kann die unterschiedlichen dielektrischen Eigenschaften von Werkstücken und menschlichen Körperteilen erkennen, sodass auch mittels eines kapazitativen Sensors eine Gefährdungssituation erkannt werden kann. Ein Infrarotsensor ermöglicht die Differenzierung zwischen einem Werkstück und menschlichen Körperteilen aufgrund der Körperwärme des menschlichen Körperteils.

Die von der Detektionsvorrichtung, beispielsweise der Bilderkennungsvorrichtung, des kapazitativen Sensors oder des Infrarotsensors, aufgenommenen Bilder werden vorzugsweise in Bezug auf eine potenzielle Gefahrensituation ausgewertet, wobei dies mittels einer Bildauswertereinheit erfolgen kann. Insbesondere ist es bevorzugt, dass die Detektionsvorrichtung die Bildauswerteeinheit umfasst.

Es ist ferner bevorzugt, dass die als Bilderkennungsvorrichtung ausgebildete Detektionsvorrichtung als Videokamera und/oder als Wärmebildkamera ausgebildet ist oder diese umfasst, wobei die Videokamera und/oder die Wärmebildkamera vorzugsweise als hochauflösende Kamera bzw. Kameras ausgebildet ist bzw. sind.

Darüber hinaus ist es bevorzugt, dass die als Bilderkennungsvorrichtung ausgebildete Detektionsvorrichtung ausgebildet ist, ein, zwei oder mehrere Bilder zeitgleich aufzunehmen, und wobei die Bildauswerteeinheit ausgebildet ist, stereoskopische Bilder zu erzeugen und bereitzustellen.

Insbesondere ist es bevorzugt, dass die Bilderkennungsvorrichtung als Stereokamera ausgebildet ist. Mittels einer Stereokamera aufgenommene Bilder können mittels einer geeigneten Bildverarbeitungsvorrichtung zu mindestens einem dreidimensionalen Bild zusammengesetzt werden. Ein dreidimensionales Bild weist in der Regel eine höhere Informationsdichte auf als ein zweidimensionales Bild.

In einer weiteren besonders bevorzugten Ausführungsvariante der Formatkreissäge ist vorgesehen, dass die Steuerungsvorrichtung angeordnet und ausgebildet ist, um eine Eigenschaft eines von der Detektionsvorrichtung erfassten Gegenstands in einem Überwachungsbereich, insbesondere einem Fernüberwachungsbereich und einen Nahüberwachungsbereich auszuwerten, und die Steuerungsvorrichtung derart ausgebildet ist, um eine dem erfassten Gegenstand zugeordnete Gefährdungssituation auf Basis der Eigenschaft zu erkennen und die erkannte Gefährdungssituation mit vorbestimmten Gefährdungssituationen zu vergleichen, wobei die vorbestimmten Gefährdungssituationen in einem Katalog, vorzugsweise datentechnisch, hinterlegt sind, und bei einer festgestellten Übereinstimmung der erfassten Gefährdungssituation mit einer vorbestimmten Gefährdungssituation die Sicherheitsvorrichtung derart anzusteuern, dass diese eine, zwei oder mehrere vorbestimmte Sicherheitsmaßnahmen ausführt.

Der Überwachungsbereich der Formatkreissäge ist vorbestimmt. Vorzugsweise weist der Überwachungsbereich eine kugelförmige Geometrie oder eine halbkugelförmige Geometrie auf, wobei der Mittelpunkt dieser Geometrien vorzugsweise am Sägeschlitz verortet ist. Darüber hinaus kann dieser Überwachungsbereich beispielsweise in einen Fernüberwachungsbereich und einen Nahüberwachungsbereich aufgeteilt werden.

Die Aufteilung in einen Fernüberwachungsbereich und in einen Nahüberwachungsbereich hat den besonderen Vorteil, dass Gefährdungssituationen im Fernüberwachungsbereich und im Nahüberwachungsbereich mit unterschiedlichen Sicherheitsmaßnahmen belegt werden können. Beispielsweise ist ein in Richtung des Kreissägeblatts bewegtes, menschliches Körperteil mit einer hohen Geschwindigkeit und einer gegebenenfalls hohen Beschleunigung im Fernüberwachungsbereich mit einer geringeren Verletzungsgefahr verbunden als die gleiche Situation in einem Nahüberwachungsbereich. Insbesondere ist es bevorzugt, dass der Nahüberwachungsbereich im Inneren des Fernüberwachungsbereiches angeordnet ist.

Eine Eigenschaft eines von der Detektionsvorrichtung erfassten Gegenstands kann beispielsweise eine Richtung, eine Geschwindigkeit und/oder eine Beschleunigung umfassen. Eine einzelne der vorgenannten Eigenschaften oder eine Summe dieser Eigenschaften wird mittels dieser Steuerungsvorrichtung ausgewertet und dem erfassten Gegenstand auf Grundlage der Eigenschaft oder der Eigenschaften eine Gefährdungssituation zugeordnet. Diese zugeordnete Gefährdungssituation wird mit hinterlegten, vorbestimmten Gefährdungssituationen verglichen. Diese vorbestimmten Gefährdungssituationen umfassen ebenfalls Eigenschaften von Körpern, wie beispielsweise Richtung, Geschwindigkeit oder Beschleunigung.

Darüber hinaus kann in den vorbestimmten Gefährdungssituationen zusätzlich noch die Eigenschaft des erkannten Gegenstands hinterlegt sein, ob dieser sich in einem Fernüberwachungsbereich oder in einem Nahüberwachungsbereich befindet. Bei einer Übereinstimmung der erfassten Gefährdungssituation mit einer vorbestimmten Gefährdungssituation steuert die Steuerungsvorrichtung die Sicherheitsvorrichtung derart an, dass diese eine, zwei oder mehrere vorbestimmte Sicherheitsmaßnahmen ausführt. Vorzugsweise ist in der Steuerungsvorrichtung oder in anderen Vorrichtungen der Formatkreissäge für jede vorbestimmte Gefährdungssituation eine vorbestimmte Sicherheitsmaßnahme hinterlegt. Infolgedessen ergibt sich auch ein programmierbarer Algorithmus zur Bestimmung und Ausführung geeigneter Sicherheitsmaßnahmen als Antwort auf vorliegende Gefährdungssituationen.

In einer weiteren bevorzugten Fortbildung der Formatkreissäge ist vorgesehen, dass die Steuerungsvorrichtung ausgebildet ist, bei einer festgestellten Übereinstimmung der erfassten Gefährdungssituation mit einer ersten vorbestimmten Gefährdungssituation die Sicherheitsvorrichtung derart anzusteuern, dass diese mindestens eine erste Sicherheitsmaßnahme ausführt, und bei einer festgestellten Übereinstimmung der erfassten Gefährdungssituation mit einer zweiten vorbestimmten Gefährdungssituation die Sicherheitsvorrichtung derart anzusteuern, dass diese mindestens eine zweite Sicherheitsmaßnahme ausführt.

Gemäß dieser Ausführungsform wird zunächst eine erste Sicherheitsmaßnahme durchgeführt, die eine zunächst nur geringe Erhöhung der Sicherheit darstellen kann, beispielsweise eine Ansenkung der Sägeblattdrehzahl oder ein akustisches oder optisches Warnsignal. Dem Bediener, der beispielsweise seine Hand in größerem Abstand vom Sägeblatt jedoch in der Sägelinie auf das Werkstück aufgelegt hat und hierdurch eine schwache Gefährdungssituation erzeugt hat, wird hierdurch die schwache Gefährdungssituation signalisiert und zugleich eine erste Vorbereitung der Maschine für deren Vermeidung getroffen. Mit fortschreitender Bearbeitung, also beispielsweise weiterer Annäherung der Hand an das Sägeblatt, kann hieraus eine starke Gefährdungssituation entstehen, die erkannt wird eine zweite Sicherheitsmaßnahme auslöst, die eine stärkere Erhöhung der Sicherheit darstellt.

Grundsätzlich ist es bevorzugt, dass eine Sicherheitsmaßnahme, die ausgelöst wurde, auch während des Bearbeitungsvorgangs eines Werkstücks wieder zurückgenommen werden kann, wenn die dafür auslösende Gefährdungssituation beseitigt ist. So kann beispielsweise eine Sicherheitsmaßnahme, insbesondere eine abgeschwächte erste Sicherheitsmaßnahme den Bediener veranlassen, die Position seiner Hand zu verändern, beispielsweise aus der Sägelinie heraus zu nehmen, und hierdurch die Gefährdungssituation entfallen. Wird dies von der Detektionseinrichtung erfasst, ist es vorteilhaft, wenn die Sicherheitsmaßnahme zurückgenommen wird, die Sägeblattdrehzahl also wieder auf normale Arbeitsdrehzahl angehoben wird oder das akustische oder optische Warnsignal abgestellt wird. Der Bediener kann den Arbeitsvorgang dann in normaler Weise weiter ausführen.

Des Weiteren ist es bevorzugt, dass die erste vorbestimmte Gefährdungssituation und/oder die zweite vorbestimmte Gefährdungssituation das von der Detektionsvorrichtung festgestellte Vorhandensein eines Gegenstands in einem Fernüberwachungsbereichs umfasst, und die erste vorbestimmte Gefährdungssituation und/oder die zweite vorbestimmte Gefährdungssituation das von der Detektionsvorrichtung festgestellte Vorhandensein eines Gegenstands in einem Nahüberwachungsbereichs umfasst.

Ferner vorzugsweise ist vorgesehen, dass der Nahüberwachungsbereich im Bereich umgebend den Sägeschlitz angeordnet ist und der Fernüberwachungsbereich den Nahüberwachungsbereich umschließt. Darüber hinaus ist es bevorzugt, dass ein Mittelpunkt des Nahüberwachungsbereichs und/oder Fernüberwachungsbereichs am Sägeschlitz oder in einem Bereich angrenzend an den Sägeschlitz angeordnet ist. Darüber hinaus kann es vorteilhaft sein, dass der Nahüberwachungsbereich und/oder Fernüberwachungsbereich ausgehend von dem jeweiligen Mittelpunkt eine runde und/oder ovale und/oder eckige Erstreckungsfläche und/oder Erstreckungsvolumen aufweist. Darüber hinaus ist es bevorzugt, dass die Erstreckungsfläche des Nahüberwachungsbereichs eine horizontale und/oder vertikale Erstreckung von kleiner 1m, 0,75m, 0,5m, 0,25m oder 0,1m aufweist. Ferner ist es bevorzugt, dass die Erstreckungsfläche des Fernüberwachungsbereichs eine horizontale und/oder vertikale Erstreckung von kleiner 3m, 2m, 1,5m, 1,25m, 1m oder 0,5m aufweist. Die Überwachungsbereiche können vorzugsweise auch kugelförmig, würfelförmig und/oder quaderförmig sein.

Des Weiteren ist es bevorzugt, dass die Detektionsvorrichtung angeordnet und ausgebildet ist, eine Geschwindigkeit und/oder eine Beschleunigung eines Gegenstands zu erfassen, und die erste vorbestimmte Gefährdungssituation eine Geschwindigkeit eines Gegenstands in einem ersten Geschwindigkeitsbereich, insbesondere oberhalb eines ersten Geschwindigkeitslimits, und/oder eine Beschleunigung eines Gegenstands in einem ersten Beschleunigungsbereich, insbesondere oberhalb eines ersten Beschleunigungslimits, umfasst, und die zweite vorbestimmte Gefährdungssituation eine Geschwindigkeit eines Gegenstands in einem zweiten Geschwindigkeitsbereich, insbesondere oberhalb eines zweiten Geschwindigkeitslimits, und/oder eine Beschleunigung eines Gegenstands in einem zweiten Beschleunigungsbereich, insbesondere oberhalb eines zweiten Beschleunigungslimits, umfasst, wobei das zweite Geschwindigkeits- bzw. Beschleunigungslimit höher ist als das erste Geschwindigkeits- bzw. Beschleunigungslimit.

In einer weiteren besonders bevorzugten Ausführungsvariante der Formatkreissäge ist vorgesehen, dass die Detektionsvorrichtung angeordnet und ausgebildet ist, eine Bewegungsrichtung eines Gegenstands zu erfassen, und die erste vorbestimmte Gefährdungssituation die Bewegungsrichtung eines Gegenstands in Richtung des Kreissägeblatts in einem ersten Winkelbereich um die direkte Richtung zum Kreissägeblatt umfasst, und die zweite vorbestimmte Gefährdungssituation die Bewegungsrichtung eines Gegenstands in Richtung des Kreissägeblatts in einem zweiten Winkelbereich um die direkte Richtung zum Kreissägeblatt umfasst, wobei der zweite Winkelbereich kleiner ist als der erste Winkelbereich.

Darüber hinaus ist es bevorzugt, dass die Sicherheitsvorrichtung eine erste Sicherheitsmaßnahme einleitet, wenn die Detektionsvorrichtung im Fernüberwachungsbereich eine erste Gefährdungssituation feststellt, und die Sicherheitsvorrichtung eine zweite Sicherheitsmaßnahme einleitet, wenn die Detektionsvorrichtung im Nahüberwachungsbereich eine erste oder zweite Gefährdungssituation feststellt, wobei die zweite Sicherheitsmaßnahme eine höhere Sicherheit vor Verletzungen bewirkt als die erste Sicherheitsmaßnahme und die erste Sicherheitsmaßnahme so ausgestaltet ist, dass sie eine weitere Bearbeitung des Werkstücks ohne Beeinträchtigung des Schnittergebnisses ermöglicht. Eine weitere bevorzugte Fortbildung der Formatkreissäge zeichnet sich dadurch aus, dass die Detektionsvorrichtung angeordnet und ausgebildet ist, um zwischen einem menschlichen Körperteil und einem nicht-menschlichen Körper zu unterscheiden, und die erste vorbestimmte Gefährdungssituation und die zweite vorbestimmte Gefährdungssituation das Vorhandensein eines menschlichen Körperteils umfasst.

Ferner ist es bevorzugt, dass ein Bedienelement, insbesondere ein mit dem Fuß bedienbares Bedienelement, beispielsweise ein Pedal, das angeordnet und ausgebildet ist, bei Betätigung die Sicherheitsvorrichtung zu deaktivieren. Mittels eines derartigen Bedienelements, kann die Sicherheitsvorrichtung bewusst deaktiviert werden, um beispielsweise einen zwar risikoreichen aber erforderlichen Schnitt an einem Werkstück durchzuführen.

Die erfindungsgemäße Sicherheitsvorrichtung kann weiterhin fortgebildet werden indem die Detektionsvorrichtung eine elektronische Vergleichseinrichtung umfasst, die dazu ausgebildet ist, um mittels einer Erfassungsvorrichtung erfasste Positionen, Bewegungsrichtungen und/oder Bewegungsgeschwindigkeiten eines Werkstücks, eines Bauelements der Formatkreissäge oder eines Körperteils des Benutzers mit vorbestimmten Arbeitsplanungsdaten zur Ausführung eines geplanten Arbeitsvorgangs oder einer Abfolge von Arbeitsvorgängen an dem Werkstück zu vergleichen, wobei die Detektionsvorrichtung ausgebildet ist, um bei der Feststellung eines Gefährdungszustands eine für diesen Arbeitsvorgang oder diese Abfolge von Arbeitsvorgängen festgestellte untypische Position, Bewegungsrichtung und/oder Bewegungsgeschwindigkeit des Werkstücks, des Bauelements der Formatkreissäge oder des Körperteils zu berücksichtigen oder bei Feststellung einer für diesen Arbeitsvorgang oder diese Abfolge von Arbeitsvorgängen festgestellten untypischen Position, Bewegungsrichtung und/oder Bewegungsgeschwindigkeit des Werkstücks, des Bauelements der Formatkreissäge oder des Körperteils einen Gefährdungszustands zu signalisieren..

Gemäß dieser Fortbildung wird eine Plausibilitätsprüfung durchgeführt, die anhand von vorab geplanten Arbeitsschritten oder auch einem einzelnen Arbeitsschritt als Zielvorgabe durchgeführt wird, indem die tatsächlich festgestellten Positionen und/oder Bewegungen des Werkstücks, des Bauteils der Formatkreissäge oder des Körperteils des Benutzers dahingehend überprüft werden, ob sie dem anstehenden Arbeitsschritt entsprechen.

Dieser Abgleich kann zum einen isoliert dazu dienen, um eine Detektion eines Gefährdungszustandes zu erreichen - erfüllt also in diesem Fall die Funktion der Detektionseinrichtung. Der Abgleich kann aber auch dazu dienen, um ergänzend zu einer anderen Dtektionsweise von Gefährdungssituationen eine Plausibilitätsprüfung durchzuführen, um dann als Gewichtung der Gefährdungsstufe in die Gesamtbeurteilung einzufließen. Dies ermöglicht es beispielsweise, bei einem Arbeitsvorgang, der aufgrund der Schnittführung oder Werkstückabmessung eine Annäherung einer Hand des Bedieners an das Werkzeug erforderlich macht, diese Annäherung nicht als Gefährdungszustand zu bewerten, wohingegen bei einem Arbeitsvorgang, der aufgrund einer anderen Schnittführung oder Werkstückabmessung eine solche Annährung nicht erfordert, eine dann detektierte identische Annäherung der Hand des Bedieners an das Werkzeug als Gefährdungszustand zu bewerten.

Als Bauteil der Formatkreissäge kann in diese Erfassung insbesondere ein verschiebbarer Auflagetisch für das Werkstück, eine Schutzhaube, ein Sägeaggregat, ein Sägeblatt, ein Vorritzsägeblatt, ein Anschlaglineal, ein entlang eines Anschlalineals verschiebbarer Anschlag oder ein Parallelanschlag und natürlich auch mehrere solche Bauteile einbezogen sein. Die Position und Bewegungsgeschwindigkeit solcher Bauteile kann einerseits dahingehend in die Detektion einbezogen werden, als dass daraus Arbeitsplanungsdaten eines Arbeitsvorgangs ermittelt werden können - zum anderen können die Position und Bewegungsgeschwindigkeit solcher Bauteile auch mit vorab bestimmten Arbeitsplanungsdaten abgeglichen werden und dadurch eine Plausibilitätsprüfung vor oder während der Durchführung eines Bearbeitungsvorgangs erfolgen. So kann beispielsweise bei einer erfassten Vorschubgeschwindigkeit des Werkstücks, die anhand von vorab bestimmten Arbeitsplanungsdaten wie der Dicke und Materialart des Werkstücks als zu schnell erkannt wird, eine Gefährdungssituation erkannt und signalisiert werden und gegebenenfalls weitere Aktionen zur Vermeidung einer Beschädigung von Maschinenteilen, zur Vermeidung eines unzureichenden Arbeitsergebnisses und zur Vermeidung einer Verletzungsgefahr des Bedieners ausgelöst und durchgeführt werden.

Die vorbestimmten Arbeitsplanungsdaten zur Ausführung eines geplanten Arbeitsvorgangs oder einer Abfolge von Arbeitsvorgängen an dem Werkstück können zum einen aus einer elektronisch gestützten Arbeitsplanungssoftware übernommen werden, die beispielsweise in die Werkzeugmaschine geladen oder übertragen wird und der Ansteuerung von Schneidparametern oder Anschlägen oder einer Arbeitsabfolge auf einem Bildschirm an der Werkzeugmaschine dient. Die Arbeitsplanungsdaten können alternativ oder zusätzlich auch aus elektronisch erfassten Positionen eines Anschlags der Werkzeugmaschine oder einer Arbeitsstellung oder Eigenschaft des Werkzeugs abgeleitet werden. So kann beispielsweise bei einem Sägeschnitt an einem Werkstück mit einem im kurzen Abstand zur Sägelinie eingestelltem Anschlag eine größere Annäherung eines Körperteils an das Werkzeug noch als Nicht-Gefährdungszustand bewertet werden, als dies der Fall wäre, wenn der Anschlag in einem größeren Abstand zur Sägelinie eingestellt ist.

Gemäß einem weiteren Aspekt der vorliegenden Erfindung wird die eingangs genannte Aufgabe gelöst durch ein computerimplementiertes Verfahren zur Steuerung und/oder eine Regelung einer Formatkreissäge, umfassend die Schritte Erkennen eines Gefährdungszustandes für ein menschliches Körperteil mittels einer Detektionsvorrichtung, insbesondere einer Detektionsvorrichtung gemäß mindestens einer der im Vorgehenden beschriebenen Ausführungsvarianten, Einleiten einer Sicherheitsmaßnahme mittels einer Sicherheitsvorrichtung, insbesondere einer Sicherheitsvorrichtung gemäß mindestens einer der im Vorgehenden beschriebenen Ausführungsvarianten, wobei die Sicherheitsmaßnahme ausgewählt wird aus der Gruppe bestehend aus Akustisches und/oder optisches Warnsignal, Reduktion der Drehzahl eines Kreissägeblatts, Ausgabe mindestens eines Entschärfungselements aus einer Speichereinheit in Richtung des Kreissägeblatts, insbesondere mittels einer Ausgabevorrichtung gemäß mindestens einer der im Vorgehenden beschriebenen Ausführungsvarianten, Anordnen eines Abschirmelements in einer Abschirmstellung, insbesondere eines Abschirmelements gemäß mindestens einer der im Vorgehenden beschriebenen Ausführungsvarianten, Absenken des Kreissägeblatts unterhalb einer Werkstückauflagefläche, wobei die Sicherheitsmaßnahme ausgewählt wird in Abhängigkeit von einer Erkennung des menschlichen Körperteils in einem Fernüberwachungsbereich und/oder Nahüberwachungsbereich, und/oder einer Geschwindigkeit des menschlichen Körperteils, und/oder einer Beschleunigung des menschlichen Körperteils, und/oder einer Bewegungsrichtung des menschlichen Körperteils.

Dieses Verfahren ermöglicht es, ebenso wie die zuvor beschriebene Formatkreissäge und die Sicherheitseinrichtung, einerseits direkt eine Gefährdung auslösende Positionen, Bewegungsrichtungen und Bewegungsgeschwindigkeiten oder-beschleunigungen eines Körperteils zu erfassen und als Auslösekriterium für eine sicherheitserhöhende Aktion heranzuziehen. Desweiteren können auch für einen vorbestimmten Arbeitsvorgang untypische Bewegungsformen oder -positionen eines Körperteils erfasst werden und als Auslösekriterium für eine sicherheitserhöhende Aktion herangezogen werden.

Das erfindungsgemäße Verfahren und seine möglichen Fortbildungen weisen Merkmale bzw. Verfahrensschritte auf, die sie insbesondere dafür geeignet machen, für eine erfindungsgemäße Formatkreissäge und ihre Fortbildungen verwendet zu werden. Für weitere Vorteile, Ausführungsvarianten und Ausführungsdetails des weiteren Aspekts und der möglichen Fortbildungen wird auch auf die zuvor erfolgte Beschreibung zu den entsprechenden Merkmalen und Fortbildungen der Formatkreissäge verwiesen.

Bevorzugte Ausführungsformen der Erfindung werden beispielhaft anhand der beiliegenden Figuren erläutert. Es zeigen:
- Figur 1:: eine schematische, dreidimensionale Ansicht einer beispielhaften Ausführungsform einer Formatkreissäge;
- Figur 2:: eine schematische, zweidimensionale Detailansicht einer beispielhaften Ausführungsform einer Sicherheitsvorrichtung mit einer ersten Werkstückposition;
- Figur 3:: eine schematische, zweidimensionale Detailansicht der Sicherheitsvorrichtung aus Figur 2 mit einer zweiten Werkstückposition;
- Figur 4:: eine schematische, zweidimensionale Detailansicht der Sicherheitsvorrichtung aus Figur 2 mit einer dritten Werkstückposition;
- Figur 5:: eine schematische, zweidimensionale Detailansicht einer weiteren beispielhaften Ausführungsform einer Sicherheitsvorrichtung mit einer ersten Werkstückposition;
- Figur 6:: eine schematische, zweidimensionale Detailansicht der Sicherheitsvorrichtung aus Figur 5 mit einer zweiten Werkstückposition;
- Figur 7:: eine schematische, zweidimensionale Detailansicht der Sicherheitsvorrichtung aus Figur 5 mit einer dritten Werkstückposition.

In den Figuren sind gleiche oder im Wesentlichen funktionsgleiche bzw. -ähnliche Elemente mit den gleichen Bezugszeichen bezeichnet.

Die Formatkreissäge 1 weist ein Maschinengrundgestell 5 auf, in dem ein Kreissägeblatt 110 an einem Sägeaggregat (nicht sichtbar) angeordnet ist. Das Kreissägeblatt 110 ragt aus einer Werkstückauflagefläche 2 nach oben heraus. An dem Maschinengrundgestell 5 ist ferner ein Rollwagen 160 angeordnet, der für eine lineare Bewegung in horizontaler Richtung entlang einer Sägelinie 3 des Kreissägeblatts 110 linear geführt ist. An dem Rollwagen 160 ist ein Winkelgehrungsanschlag 156 befestigt, der sich mit dem Rollwagen 160 bewegt und eine Winkelanschlagsschiene 154 trägt. An der Winkelanschlagsschiene 154 können Werkstücke, die auf dem Rollwagen 160 und einer Auflagefläche des Winkelgehrungsanschlags 156 aufliegen, mit einer Kante angelegt werden, um hierdurch eine definierte Winkelausrichtung einzustellen und während des Sägeschnittes beizubehalten.

Entlang der Winkelanschlagsschiene 154 sind zwei Anschlagklappen 152, 153 in Längsrichtung der Winkelanschlagsschiene 154 verfahrbar und daran fixierbar angeordnet. Mittels der Anschlagklappen 152, 153 kann eine weitere Kante des Werkstücks in einer definierten Position gehalten werden, um hierdurch ein Schnittmaß einzustellen. Der Winkelgehrungsanschlag 156 kann in einer horizontalen Ebene nach Art eines Parallelogramms verschwenkt werden, wodurch die Winkelanschlagsschiene 154 in unterschiedlichen Winkellagen zur Sägelinie 3 ausgerichtet werden kann.

Mittels eines schwenkbar am Maschinengrundgestell 5 befestigten Teleskoparms 158 ist die außenliegende Kante des Winkelgehrungsanschlags 156 in vertikaler Richtung abgestützt, um ein Werkstück tragen zu können. An der Werkstückauflagefläche 2 ist weiterhin ein Parallelanschlag 150 angeordnet, der sich parallel zur Sägelinie 3 erstreckt und eine alternative oder zusätzliche Anlagefläche für eine Werkstückkante bildet, wenn ein Schnitt ausgeführt werden soll, der parallel zu einer Kante des Werkstücks laufen soll.

Die Formatkreissäge 1 umfasst ferner eine Detektionsvorrichtung 170, die an der Schutzhaube 121 angeordnet ist. Die Detektionsvorrichtung 170 kann darüber hinaus an separaten Vorrichtungen, beispielsweise Knickarmen oder auch am Werkstücktisch angeordnet sein. Die Detektionsvorrichtung 170 kann als Bilderkennungsvorrichtung ausgebildet sein oder kann diese umfassen. Darüber hinaus kann die Detektionsvorrichtung 170 mindestens einen kapazitativen Sensor und/oder mindestens einen Infrarotsensor aufweisen. Darüber hinaus ist es bevorzugt, dass die Formatkreissäge 1 eine Bildauswerteeinheit umfasst, wobei die Bildauswerteeinheit vorzugsweise von der Detektionsvorrichtung 170 und/oder einer Steuerungsvorrichtung umfasst wird. Ferner umfasst die Formatkreissäge 1 eine Anzeigevorrichtung 128 mit der Steuerungsvorrichtung.

Die Formatkreissäge 1 weist ferner eine Schutzhaube 121 auf. Die Schutzhaube 121 weist ein Schutzhaubengehäuse 123 auf, das einen Schutzhaubeninnenraum 122 von insgesamt fünf Seiten umschließt. Die nach unten gerichtete Seite des Schutzhaubeninnenraums 122 ist offen. Mittels dieser offenen Seite kann die Schutzhaube 121 dem Kreissägeblatt 110 genähert werden und bei entsprechender Anordnung der Schutzhaube 121 das Kreissägeblatt zumindest abschnittsweise abdecken, um Verletzungen von Personen zu vermeiden. Darüber hinaus weist die Schutzhaube 121 vorzugsweise eine Spanabsaugung auf, mit der durch den Schnitt entstehende Späne aus der Schnittzone entfernt werden können.

Die Schutzhaube 121 ist an einer Knickarmvorrichtung 120 angeordnet. Die Schutzhaube 121 ist unmittelbar an einem Knickarm 124 angeordnet, wobei dieser eine Mehrzahl an Gelenken aufweist. Der Knickarm 124 ist wiederum an einem vertikal ausgerichteten Haltepfahl 126 angeordnet.

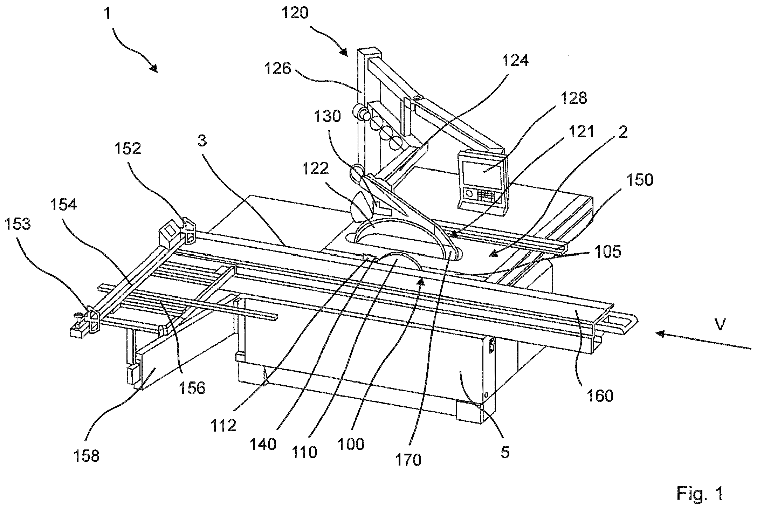

Die Formatkreissäge 1 umfasst ferner eine erste Ausgabevorrichtung 130 zum Ausgeben eines Entschärfungselements, wobei die Ausgabevorrichtung 130 derart angeordnet und ausgebildet ist, um das Entschärfungselement aus einer Speichereinheit (hier nicht gezeigt) in Richtung des Kreissägeblatts 110 als Sicherheitsmaßnahme auszugeben. Die erste Ausgabevorrichtung 130 ist derart an der Schutzhaube 121 angeordnet und ausgebildet, dass das Entschärfungselement innerhalb des Schutzhaubeninnenraums 122 auf das Kreissägeblatt 110 aufgebracht wird. Die Speichereinheit für das Entschärfungselement, welches von der ersten Ausgabevorrichtung 130 ausgegeben wird, ist vorzugsweise auf der in Fig. 1 nicht gezeigten Rückseite der Formatkreissäge angeordnet. Zu diesem Zweck ist die nicht gezeigte Speichereinheit mit einer Transportvorrichtung mit der ersten Ausgabevorrichtung 130 verbunden, um die erste Ausgabevorrichtung 130 mit dem Entschärfungselement zu versorgen.

Die Formatkreissäge 1 weist darüber hinaus eine zweite Ausgabevorrichtung 140 zum Ausgeben eines Entschärfungselements auf, wobei das Entschärfungselement aus der Speichereinheit in Richtung des Kreissägeblatts 110 als Sicherheitsmaßnahme ausgegeben werden kann. Die zweite Ausgabevorrichtung 140 ist in werkstückbezogener Vorschubrichtung hinter dem Kreissägeblatt 110 angeordnet. Die zweite Ausgabevorrichtung 140 ist zumindest teilweise von dem Spaltkeil 112 umfasst, sodass das Entschärfungselement vorzugsweise am Spaltkeil 112 ausgegeben wird.

Die Formatkreissäge 1 umfasst vorliegend eine erste Ausgabevorrichtung 130 und eine zweite Ausgabevorrichtung 140. Der vorteilhafte Effekt einer Abschirmung des Kreissägeblattes 110 mittels eines Entschärfungselementes kann bereits durch die Anordnung einer einzelnen Ausgabevorrichtung realisiert werden. In der vorliegenden Ausführungsvariante mit zwei Ausgabevorrichtungen 130, 140 können weitere vorteilhafte Effekte erzielt werden, wobei insbesondere die noch schnellere und umfassendere Entschärfung des Kreissägeblattes 110 mit einem Entschärfungselement ermöglicht wird.

Darüber hinaus ist das Kreissägeblatt 110 derart an dem Sägeaggregat angeordnet, dass dieses absenkbar ist. Insbesondere ist das Kreissägeblatt 110 innerhalb weniger Zehntelsekunden absenkbar, so dass das Absenken als Sicherheitsmaßnahme geeignet ist.

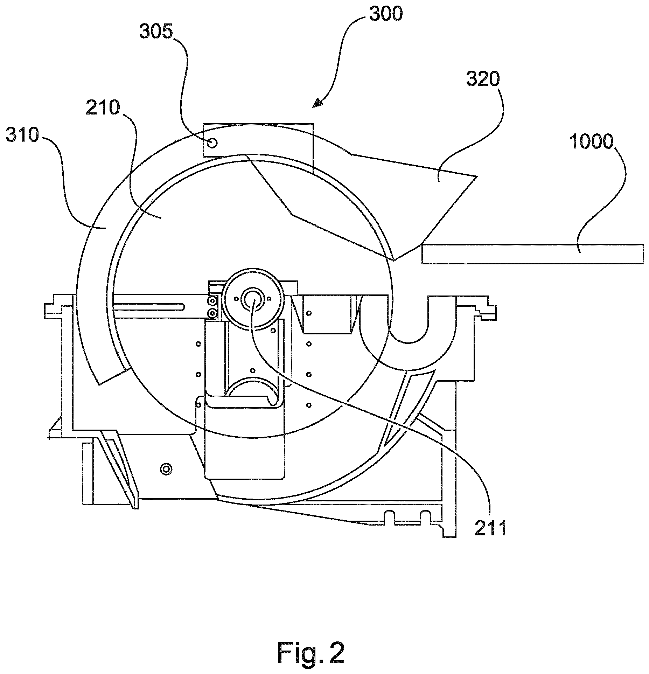

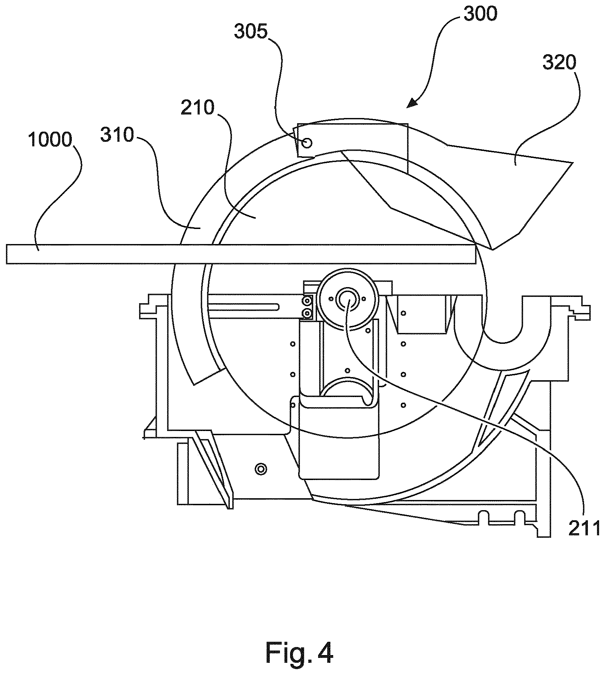

In den Figuren 2 bis 4 ist ein Abschirmelement 300 gezeigt, wobei das Abschirmelement 300 ein festes Abschirmelement 310 und ein bewegliches Abschirmelement 320 aufweist, wobei das bewegliche Abschirmelement 320 um eine horizontale Achse an einem Drehpunkt 305, die insbesondere parallel zur Rotationsachse 211 des Kreissägeblatts ausgerichtet ist, bewegbar angeordnet ist. Das bewegliche Abschirmelement 320 ist klappbar an dem festen Abschirmelement 310 angeordnet. Der Klappvorgang kann sukzessive aus den Figuren 2 bis 4 entnommen werden. In der Fig. 2 ist gezeigt, wie sich ein Werkstück 1000 an das bewegliche Abschirmelement 320 annähert.

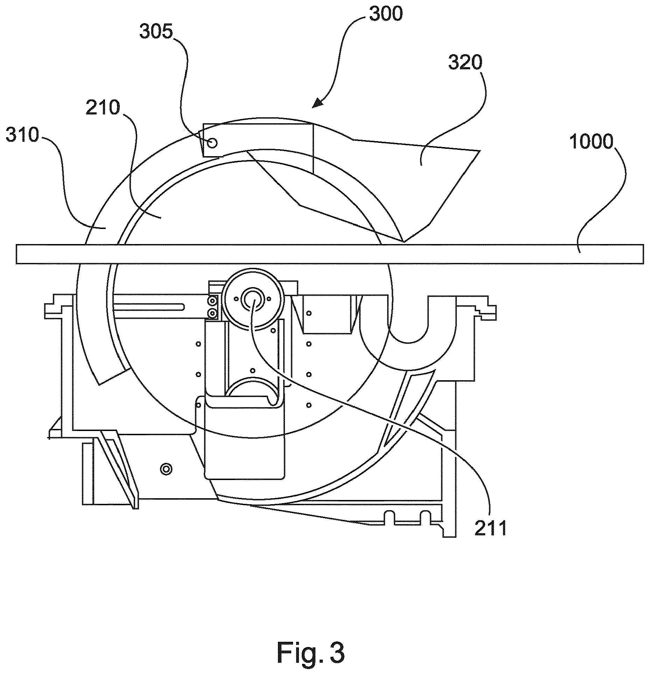

Durch die Geometrie des beweglichen Abschirmelements 320 wird dieses in einer vertikalen Richtung nach oben geklappt, sodass das Werkstück 1000 unter dem beweglichen Abschirmelement 320 hindurchgeführt werden kann. Dieses Hindurchführen des Werkstücks 1000 unter dem beweglichen Abschirmelement 320 kann insbesondere der Fig. 3 entnommen werden.

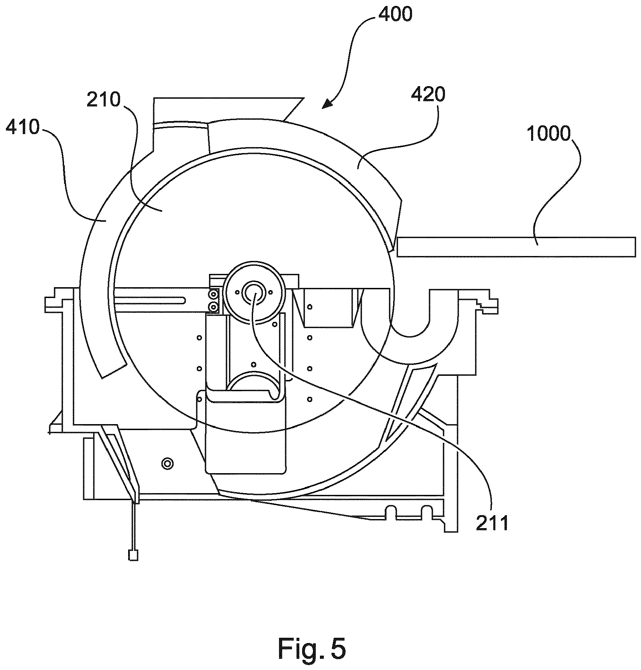

In den Figuren 5 bis 7 ist eine alternative Ausführungsform für ein Abschirmelement 400 gezeigt. Das Abschirmelement 400 weist ebenfalls ein festes Abschirmelement 410 und eine bewegliches Abschirmelement 420 auf. Das bewegliche Abschirmelement 420 ist jedoch gegenüber der im Vorherigen beschriebenen Ausführungsform im Wesentlichen nicht klappbar an dem festen Abschirmelement 410 angeordnet, sondern in tangentialer Richtung relativ zu dem festen Abschirmelement 410 bewegbar.

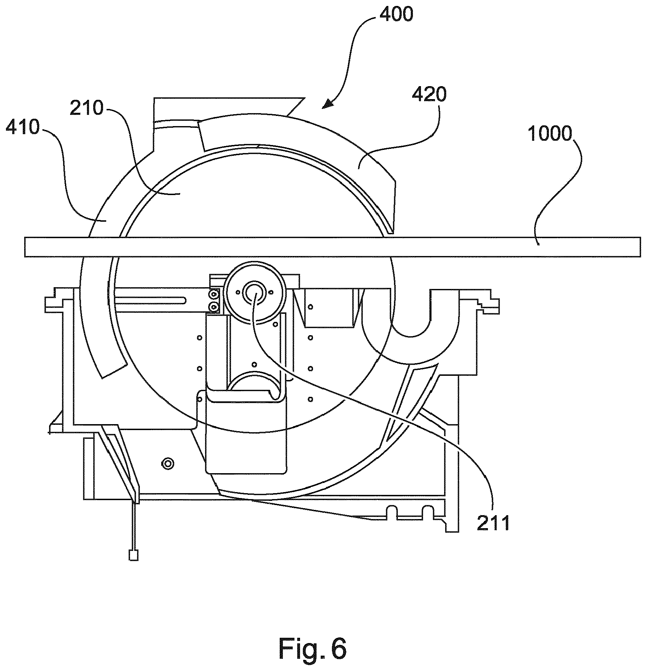

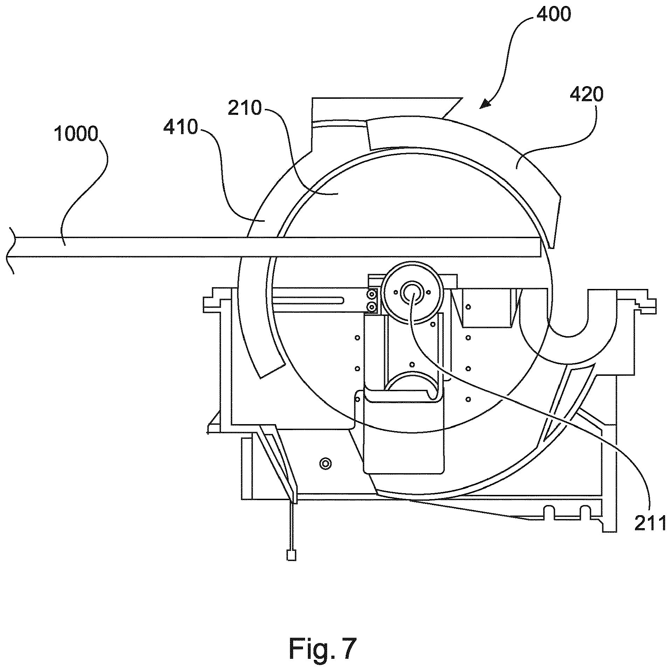

Bei Annäherung eines Werkstückes 1000 an die Sicherheitsvorrichtung, die in den Figuren 5 bis 7 gezeigt ist, wird das bewegliche Abschirmelement 420 in tangentialer Richtung entgegen des Uhrzeigersinnes verschoben. Durch diese Verschiebung in tangentialer Richtung entgegen des Uhrzeigersinnes wird zwischen dem beweglichen Abschirmelement 420 und einer Werkstückauflagefläche ein Spalt frei, durch den das Werkstück 1000 hindurchgeführt werden kann. In den Figuren 6 und 7 wird insbesondere gezeigt, wie das Hindurchführen des Werkstücks 1000 durch die Sicherheitsvorrichtung erfolgt.

Die Abschirmelemente 300, 400 sind insbesondere derart angeordnet und ausgebildet, um in einer Abschirmstellung im Bereich oberhalb der Werkstückauflagefläche, die Sägezähne in radialer Richtung in Bezug auf die Drehachse 211 des Kreissägeblatts zumindest abschnittsweise abzuschirmen. Das Abschirmelement 300, 400 umschließt die Sägezähne in radialer Richtung und vorzugsweise auch in axial seitlicher Richtung in Bezug auf die Drehachse 211 des Kreissägeblatts 210.

Eine Formatkreissäge 1 mit Ausgabevorrichtungen 130, 140 für Entschärfungselemente und/oder mit Abschirmelementen 300, 400 und/oder mit absenkbarem Kreissägeblatt 110 kann die Sicherheit von Bedienern und weiteren Personen steigern. Durch das Abschirmelement 300, 400 besteht für einen Bediener die geringere Chance, bei der Bedienung mit dem Kreissägeblatt 110, 210 in Kontakt zu kommen. Darüber hinaus ist ein nicht unwesentlicher Teil des Umfangs des Kreissägeblatts 210 von dem Abschirmelement 300, 400 abgedeckt, sodass auch für eine Person, die die Formatkreissäge 1 nicht bedient, eine geringere Verletzungsgefahr durch das Kreissägeblatt 210 ausgeht.

Darüber hinaus weist die Formatkreissäge eine Detektionsvorrichtung 170 auf, die einen Überwachungsbereich überwacht. Innerhalb des Überwachungsbereiches erkennt die Detektionsvorrichtung Gefährdungszustände für menschliche Körperteile durch das Kreissägeblatt 110, wobei durch die Ausgabevorrichtung 130, 140 Verletzungen von menschlichen Körperteilen vermieden werden können. Zu diesem Zweck umfasst die Formatkreissäge 1 weiterhin eine nicht gezeigte Steuerungsvorrichtung, die angeordnet und ausgebildet, in Folge einer Erkennung des mindestens einen Gefährdungszustandes mittels der Detektionsvorrichtung 170, eine Sicherheitsmaßnahme mittels der Ausgabevorrichtung 130, 140 oder des absenkbaren Kreissägeblatts 110 einzuleiten.

Weitere Aspekte der Erfindung sind:
1. Formatkreissäge, insbesondere zur Bearbeitung von Holz- und/oder Kunststoffmaterialien, umfassend
   - eine Werkstückauflagefläche mit einem Sägeschlitz,
   - ein Sägeaggregat mit einem Kreissägeblatt, das eine Vielzahl an Sägezähnen zum Bearbeiten von Werkstücken aufweist,
   - wobei das Kreissägeblatt an dem Sägeaggregat unterhalb der Werkstückauflagefläche drehbar gelagert ist und in einem Sägebetriebsmodus durch den Sägeschlitz hindurchragt,
   - eine Detektionsvorrichtung zur Erkennung mindestens eines Gefährdungszustandes für ein menschliches Körperteil durch das Sägeblatt,
   - eine Sicherheitsvorrichtung zur Vermeidung von Verletzungen eines menschlichen Körperteils durch das Kreissägeblatt mittels einer Sicherheitsmaßnahme, und
   - eine Steuerungsvorrichtung, welche mit der Detektionsvorrichtung und der Sicherheitsvorrichtung signaltechnisch gekoppelt ist, wobei
   - die Steuerungsvorrichtung angeordnet und ausgebildet ist, in Folge einer Erkennung des mindestens einen Gefährdungszustandes mittels der Detektionsvorrichtung, eine Sicherheitsmaßnahme mittels der Sicherheitsvorrichtung einzuleiten.
2. Formatkreissäge gemäß dem vorhergehenden Aspekt, wobei
   - die Sicherheitsvorrichtung angeordnet und ausgebildet ist, eine Sicherheitsmaßnahme auszuführen, wobei die Sicherheitsmaßnahme aus zwei oder mehreren verfügbaren Sicherheitsmaßnahmen ausgewählt wird,
   - wobei vorzugsweise die Steuerungsvorrichtung ausgebildet ist, die Sicherheitsmaßnahme situationsabhängig und/oder zeitversetzt einzuleiten.
3. Formatkreissäge gemäß einem der vorhergehenden Aspekte, wobei
   - die Sicherheitsvorrichtung eine Speichereinheit für ein Entschärfungselement und eine Ausgabevorrichtung zum Ausgeben des Entschärfungselements umfasst, wobei die Ausgabevorrichtung so angeordnet und ausgebildet ist, um das Entschärfungselement aus der Speichereinheit in Richtung des Kreissägeblattes als Sicherheitsmaßnahme auszugeben.
4. Formatkreissäge gemäß dem vorhergehenden Aspekt, wobei
   - die Ausgabevorrichtung angeordnet und ausgebildet ist, das Entschärfungselement in einer werkstückbezogenen Vorschubrichtung vor und/oder hinter dem Kreissägeblatt auszugeben, und/oder
   - die Ausgabevorrichtung angeordnet und ausgebildet ist, das Entschärfungselement in einem Bereich unterhalb der Werkstückauflagefläche auszugeben, und/oder
   - die Ausgabevorrichtung zumindest teilweise von dem Spaltkeil umfasst wird, und das Entschärfungselement vorzugsweise am Spaltkeil ausgegeben wird.
5. Formatkreissäge gemäß einem der vorhergehenden Aspekte 3-4, wobei
   - das Entschärfungselement ein festes und/oder aushärtendes und/oder fließfähiges Material ist, vorzugsweise ein aushärtender und/oder viskoelastischer Kunststoff ist, insbesondere als eine Kunststoffschnur oder eine Vielzahl von Partikeln ausgebildet ist, und die Ausgabevorrichtung angeordnet und ausgebildet ist, um das Entschärfungselement so auszugeben, dass die Sägezähne des Kreissägeblatts von dem Entschärfungselement umhüllt werden.
6. Formatkreissäge gemäß einem der vorhergehenden Aspekte 3-5, umfassend
   - eine Schutzhaube mit einem Schutzhaubengehäuse, das einen Schutzhaubeninnenraum umschließt und das Kreissägeblatt in dem Sägebetriebsmodus teilweise in dem Schutzhaubeninnenraum aufnimmt, wobei
   - die Ausgabevorrichtung derart an der Schutzhaube angeordnet und ausgebildet ist, um das Entschärfungselement innerhalb des Schutzhaubeninnenraums auf das Kreissägeblatt aufzubringen.
7. Formatkreissäge gemäß einem der vorhergehenden Aspekte, umfassend ein Abschirmelement, wobei
   - das Abschirmelement angeordnet und ausgebildet ist, um in einer Abschirmstellung im Bereich oberhalb der Werkstückauflagefläche, die Sägezähne in radialer Richtung in Bezug auf die Drehachse des Kreissägeblatts zumindest abschnittsweise abzuschirmen
   - wobei vorzugsweise in der Abschirmstellung im Bereich oberhalb der Werkstückauflagefläche zwischen einem Innenumfang des Abschirmelements und dem Außendurchmesser des Kreissägeblatts in radialer Richtung des Kreissägeblatts ein Abstand von kleiner 2 mm, 5 mm, 10 mm, 15 mm, 20 mm, oder 50 mm besteht
   - das Abschirmelement die Sägezähne in radialer Richtung und/oder in axial seitlicher Richtung in Bezug auf die Drehachse des Kreissägeblatts umschließt,
   - das Abschirmelement in einer Sägebetriebsmodus-Stellung im Wesentlichen unterhalb der Werkstückauflagefläche angeordnet ist,
   - das Abschirmelement in der Sägebetriebsmodus-Stellung einen in werkstückbezogener Vorschubrichtung hinter dem Kreissägeblatt angeordneten Spaltkeil aufweist,
   - das Abschirmelement derart angeordnet und ausgebildet ist, dass dieses in im Wesentlichen tangentialer Richtung des Kreissägeblatts bewegbar ist, wobei eine Drehachse dieser Bewegung vorzugsweise parallel, insbesondere koaxial, zur Drehachse des Kreissägeblatts ausgerichtet ist, und/oder
   - das Abschirmelement einen ersten Abschnitt und einen zweiten Abschnitt aufweist, wobei der zweite Abschnitt bewegbar, insbesondere schwenkbar, an dem ersten Abschnitt angeordnet ist, wobei der zweite Abschnitt vorzugsweise um eine horizontale Achse, die insbesondere parallel zur Rotationsachse des Sägeblatts verläuft, bewegbar, insbesondere schwenkbar, ist.
8. Formatkreissäge gemäß einem der vorhergehenden Aspekte,
   - wobei die Detektionsvorrichtung als Bilderkennungsvorrichtung ausgebildet ist oder diese umfasst und vorzugsweise mindestens einen kapazitativen Sensor und/oder mindestens einen Infrarotsensor aufweist, und/oder
   - umfassend eine Bildauswerteeinheit, wobei die Bildauswerteeinheit vorzugsweise von der Detektionsvorrichtung umfasst wird.
   wobei vorzugsweise die als Bilderkennungsvorrichtung ausgebildete Detektionsvorrichtung als Videokamera und/oder als Wärmebildkamera ausgebildet ist oder diese umfasst, wobei die Videokamera und/oder die Wärmebildkamera vorzugsweise als hochauflösende Kamera bzw. Kameras ausgebildet ist bzw. sind.
   und weiter vorzugsweise
   - die als Bilderkennungsvorrichtung ausgebildete Detektionsvorrichtung ausgebildet ist, ein, zwei oder mehrere Bilder zeitgleich aufzunehmen, und
   - die Bildauswerteeinheit ausgebildet ist, stereoskopische Bilder zu erzeugen und bereitzustellen.
9. Formatkreissäge gemäß einem der vorhergehenden Aspekte, wobei
   - die Steuerungsvorrichtung angeordnet und ausgebildet ist, um eine Eigenschaft eines von der Detektionsvorrichtung erfassten Gegenstands in einem Überwachungsbereich, insbesondere einem Fernüberwachungsbereich und einen Nahüberwachungsbereich auszuwerten, und
   - die Steuerungsvorrichtung derart ausgebildet ist, um
      ∘ eine dem erfassten Gegenstand zugeordnete Gefährdungssituation auf Basis der Eigenschaft zu erkennen und die erkannte Gefährdungssituation mit vorbestimmten Gefährdungssituationen zu vergleichen,
      ∘ wobei die vorbestimmten Gefährdungssituationen in einem Katalog, vorzugsweise datentechnisch, hinterlegt sind, und
      ∘ bei einer festgestellten Übereinstimmung der erfassten Gefährdungssituation mit einer vorbestimmten Gefährdungssituation die Sicherheitsvorrichtung derart anzusteuern, dass diese eine, zwei oder mehrere vorbestimmte Sicherheitsmaßnahmen ausführt.
10. Formatkreissäge gemäß dem vorhergehenden Aspekt 9, wobei die Steuerungsvorrichtung ausgebildet ist,
   - bei einer festgestellten Übereinstimmung der erfassten Gefährdungssituation mit einer ersten vorbestimmten Gefährdungssituation die Sicherheitsvorrichtung derart anzusteuern, dass diese mindestens eine erste Sicherheitsmaßnahme ausführt, und
   - bei einer festgestellten Übereinstimmung der erfassten Gefährdungssituation mit einer zweiten vorbestimmten Gefährdungssituation die Sicherheitsvorrichtung derart anzusteuern, dass diese mindestens eine zweite Sicherheitsmaßnahme ausführt.
11. Formatkreissäge gemäß einem der vorhergehenden Aspekte 9-10, wobei
   - die erste vorbestimmte Gefährdungssituation und/oder die zweite vorbestimmte Gefährdungssituation das von der Detektionsvorrichtung festgestellte Vorhandensein eines Gegenstands in einem Fernüberwachungsbereichs umfasst, und
   - die erste vorbestimmte Gefährdungssituation und/oder die zweite vorbestimmte Gefährdungssituation das von der Detektionsvorrichtung festgestellte Vorhandensein eines Gegenstands in einem Nahüberwachungsbereichs umfasst.
12. Formatkreissäge nach einem der vorhergehenden Aspekte 9-11, wobei
   - die Detektionsvorrichtung angeordnet und ausgebildet ist, eine Geschwindigkeit und/oder eine Beschleunigung eines Gegenstands zu erfassen, und
   - die erste vorbestimmte Gefährdungssituation eine Geschwindigkeit eines Gegenstands in einem ersten Geschwindigkeitsbereich, insbesondere oberhalb eines ersten Geschwindigkeitslimits, und/oder eine Beschleunigung eines Gegenstands in einem ersten Beschleunigungsbereich, insbesondere oberhalb eines ersten Beschleunigungslimits, umfasst, und
   - die zweite vorbestimmte Gefährdungssituation eine Geschwindigkeit eines Gegenstands in einem zweiten Geschwindigkeitsbereich, insbesondere oberhalb eines zweiten Geschwindigkeitslimits, und/oder eine Beschleunigung eines Gegenstands in einem zweiten Beschleunigungsbereich, insbesondere oberhalb eines zweiten Beschleunigungslimits, umfasst,
   - wobei das zweite Geschwindigkeits- bzw. Beschleunigungslimit höher ist als das erste Geschwindigkeits- bzw. Beschleunigungslimit.
13. Formatkreissäge gemäß einem der vorhergehenden Aspekte 9-12, wobei
   - die Detektionsvorrichtung angeordnet und ausgebildet ist, eine Bewegungsrichtung eines Gegenstands zu erfassen, und
   - die erste vorbestimmte Gefährdungssituation die Bewegungsrichtung eines Gegenstands in Richtung des Kreissägeblatts in einem ersten Winkelbereich um die direkte Richtung zum Kreissägeblatt umfasst, und
   - die zweite vorbestimmte Gefährdungssituation die Bewegungsrichtung eines Gegenstands in Richtung des Kreissägeblatts in einem zweiten Winkelbereich um die direkte Richtung zum Kreissägeblatt umfasst, wobei der zweite Winkelbereich kleiner ist als der erste Winkelbereich.
14. Formatkreissäge gemäß einem der vorhergehenden Aspekte 9-13, wobei
   - die Sicherheitsvorrichtung eine erste Sicherheitsmaßnahme einleitet, wenn
   - die Detektionsvorrichtung im Fernüberwachungsbereich eine erste Gefährdungssituation feststellt, und
   - die Sicherheitsvorrichtung eine zweite Sicherheitsmaßnahme einleitet, wenn die Detektionsvorrichtung im Nahüberwachungsbereich eine erste oder zweite Gefährdungssituation feststellt,
   - wobei die zweite Sicherheitsmaßnahme eine höhere Sicherheit vor Verletzungen bewirkt als die erste Sicherheitsmaßnahme und die erste Sicherheitsmaßnahme so ausgestaltet ist, dass sie eine weitere Bearbeitung des Werkstücks ohne Beeinträchtigung des Schnittergebnisses ermöglicht.
15. Formatkreissäge gemäß einem der vorhergehenden Aspekte, umfassend
   - ein Bedienelement, insbesondere ein mit dem Fuß bedienbares Bedienelement, beispielsweise ein Pedal, das angeordnet und ausgebildet ist, bei Betätigung die Sicherheitsvorrichtung zu deaktivieren.
16. Formatkreissäge gemäß einem der vorhergehenden Aspekte,
   dadurch gekennzeichnet, dass die Detektionsvorrichtung eine elektronische Vergleichseinrichtung umfasst, die dazu ausgebildet ist, um mittels einer Erfassungsvorrichtung erfasste Positionen, Bewegungsrichtungen und/oder Bewegungsgeschwindigkeiten eines Werkstücks, eines Bauelements der Formatkreissäge oder eines Körperteils des Benutzers mit vorbestimmten Arbeitsplanungsdaten zur Ausführung eines geplanten Arbeitsvorgangs oder einer Abfolge von Arbeitsvorgängen an dem Werkstück zu vergleichen, wobei die Detektionsvorrichtung ausgebildet ist, um
   bei der Feststellung eines Gefährdungszustands eine für diesen Arbeitsvorgang oder diese Abfolge von Arbeitsvorgängen festgestellte untypische Position, Bewegungsrichtung und/oder Bewegungsgeschwindigkeit des Werkstücks, des Bauelements der Formatkreissäge oder des Körperteils zu berücksichtigen oder
   bei Feststellung einer für diesen Arbeitsvorgang oder diese Abfolge von Arbeitsvorgängen festgestellten untypischen Position, Bewegungsrichtung und/oder Bewegungsgeschwindigkeit des Werkstücks, des Bauelements der Formatkreissäge oder des Körperteils einen Gefährdungszustands zu signalisieren.
17. Computerimplementiertes Verfahren zur Steuerung und/oder Regelung einer Formatkreissäge, umfassend die Schritte
   - Erkennen eines Gefährdungszustandes für ein menschliches Körperteil mittels einer Detektionsvorrichtung, insbesondere einer Detektionsvorrichtung gemäß den Aspekten 8-14 oder 16,
   - Einleiten einer Sicherheitsmaßnahme mittels einer Sicherheitsvorrichtung, insbesondere einer Sicherheitsvorrichtung gemäß den Aspekten 1-17, wobei die Sicherheitsmaßnahme ausgewählt wird aus der Gruppe bestehend aus
      ∘ Akustisches und/oder optisches Warnsignal,
      ∘ Reduktion der Drehzahl eines Kreissägeblatts,
      ∘ Ausgabe mindestens eines Entschärfungselements aus einer Speichereinheit in Richtung des Kreissägeblatts, insbesondere mittels einer Ausgabevorrichtung gemäß den Aspekten 3-5,
      ∘ Anordnen eines Abschirmelements in einer Abschirmstellung, insbesondere eines Abschirmelements gemäß Aspekt 7,
      ∘ Absenken des Kreissägeblatts unterhalb einer Werkstückauflagefläche,
   - wobei die Sicherheitsmaßnahme ausgewählt wird in Abhängigkeit von
      ∘ einer Erkennung des menschlichen Körperteils in einem Fernüberwachungsbereich und/oder Nahüberwachungsbereich, und/oder
      ∘ einer Geschwindigkeit des menschlichen Körperteils, und/oder
      ∘ einer Beschleunigung des menschlichen Körperteils, und/oder
      ∘ einer Bewegungsrichtung des menschlichen Körperteils.

### BEZUGSZEICHEN

- 1: Formatkreissäge
- 2: Werkstückauflagefläche
- 3: Sägelinie
- 5: Maschinengrundgestell
- 100: Trennbereich
- 105: Sägeschlitz
- 110, 210: Kreissägeblatt
- 112: Spaltkeil
- 120: Knickarmvorrichtung
- 121: Schutzhaube
- 122: Schutzhaubeninnenraum
- 123: Schutzhaubengehäuse
- 124: Knickarm
- 126: Haltepfahl
- 128: Anzeigevorrichtung mit Steuerungsvorrichtung
- 130: erste Ausgabevorrichtung
- 140: zweite Ausgabevorrichtung
- 150: Parallelanschlag
- 152, 153: Anschlagklappen
- 154: Winkelanschlagsschiene
- 156: Winkelgehrungsanschlag
- 158: Teleskoparm
- 160: Rollwagen
- 170: Detektionsvorrichtung
- 211: Rotationsachse Kreissägeblatt
- 300,400: Abschirmelement
- 305: Drehpunkt
- 310, 410: festes Abschirmelement
- 320, 420: bewegliches Abschirmelement
- 1000: Werkstück

## Patentansprüche

1. Formatkreissäge, insbesondere zur Bearbeitung von Holz- und/oder Kunststoffmaterialien, umfassend
- eine Werkstückauflagefläche mit einem Sägeschlitz,
- ein Sägeaggregat mit einem Kreissägeblatt, das eine Vielzahl an Sägezähnen zum Bearbeiten von Werkstücken aufweist,
- wobei das Kreissägeblatt an dem Sägeaggregat unterhalb der Werkstückauflagefläche drehbar gelagert ist und in einem Sägebetriebsmodus durch den Sägeschlitz hindurchragt,
- eine Detektionsvorrichtung zur Erkennung mindestens eines Gefährdungszustandes für ein menschliches Körperteil durch das Sägeblatt,
- eine Sicherheitsvorrichtung zur Vermeidung von Verletzungen eines menschlichen Körperteils durch das Kreissägeblatt mittels einer Sicherheitsmaßnahme, und
- eine Steuerungsvorrichtung, welche mit der Detektionsvorrichtung und der Sicherheitsvorrichtung signaltechnisch gekoppelt ist, wobei
- die Steuerungsvorrichtung angeordnet und ausgebildet ist, in Folge einer Erkennung des mindestens einen Gefährdungszustandes mittels der Detektionsvorrichtung, eine Sicherheitsmaßnahme mittels der Sicherheitsvorrichtung einzuleiten,
- **dadurch gekennzeichnet, dass**
- die Detektionsvorrichtung als Bilderkennungsvorrichtung ausgebildet ist oder diese umfasst,
- und umfassend eine Bildauswerteeinheit, wobei die Bildauswerteeinheit vorzugsweise von der Detektionsvorrichtung umfasst wird.

2. Formatkreissäge gemäß Anspruch 1, wobei
**Dadurch gekennzeichnet, dass** die Detektionsvorrichtung mindestens einen kapazitativen Sensor und/oder mindestens einen Infrarotsensor aufweist.

3. Formatkreissäge gemäß Anspruch 1 oder 2,
**dadurch gekennzeichnet, dass** die als Bilderkennungsvorrichtung ausgebildete Detektionsvorrichtung als Videokamera und/oder als Wärmebildkamera ausgebildet ist oder diese umfasst, wobei die Videokamera und/oder die Wärmebildkamera vorzugsweise als hochauflösende Kamera bzw. Kameras ausgebildet ist bzw. sind

4. Formatkreissäge gemäß einem der vorhergehenden Ansprüche,
**dadurch gekennzeichnet, dass**
- die als Bilderkennungsvorrichtung ausgebildete Detektionsvorrichtung ausgebildet ist, ein, zwei oder mehrere Bilder zeitgleich aufzunehmen, und
- die Bildauswerteeinheit ausgebildet ist, stereoskopische Bilder zu erzeugen und bereitzustellen.

5. Formatkreissäge gemäß einem der vorhergehenden Ansprüche, wobei
- die Sicherheitsvorrichtung angeordnet und ausgebildet ist, eine Sicherheitsmaßnahme auszuführen, wobei die Sicherheitsmaßnahme aus zwei oder mehreren verfügbaren Sicherheitsmaßnahmen ausgewählt wird,
- wobei vorzugsweise die Steuerungsvorrichtung ausgebildet ist, die Sicherheitsmaßnahme situationsabhängig und/oder zeitversetzt einzuleiten.

6. Formatkreissäge gemäß einem der vorhergehenden Ansprüche, umfassend ein Abschirmelement, wobei
- das Abschirmelement angeordnet und ausgebildet ist, um in einer Abschirmstellung im Bereich oberhalb der Werkstückauflagefläche, die Sägezähne in radialer Richtung in Bezug auf die Drehachse des Kreissägeblatts zumindest abschnittsweise abzuschirmen
- wobei vorzugsweise in der Abschirmstellung im Bereich oberhalb der Werkstückauflagefläche zwischen einem Innenumfang des Abschirmelements und dem Außendurchmesser des Kreissägeblatts in radialer Richtung des Kreissägeblatts ein Abstand von kleiner 2 mm, 5 mm, 10 mm, 15 mm, 20 mm, oder 50 mm besteht
- das Abschirmelement die Sägezähne in radialer Richtung und/oder in axial seitlicher Richtung in Bezug auf die Drehachse des Kreissägeblatts umschließt,
- das Abschirmelement in einer Sägebetriebsmodus-Stellung im Wesentlichen unterhalb der Werkstückauflagefläche angeordnet ist,
- das Abschirmelement in der Sägebetriebsmodus-Stellung einen in werkstückbezogener Vorschubrichtung hinter dem Kreissägeblatt angeordneten Spaltkeil aufweist,
- das Abschirmelement derart angeordnet und ausgebildet ist, dass dieses in im Wesentlichen tangentialer Richtung des Kreissägeblatts bewegbar ist, wobei eine Drehachse dieser Bewegung vorzugsweise parallel, insbesondere koaxial, zur Drehachse des Kreissägeblatts ausgerichtet ist, und/oder
- das Abschirmelement einen ersten Abschnitt und einen zweiten Abschnitt aufweist, wobei der zweite Abschnitt bewegbar, insbesondere schwenkbar, an dem ersten Abschnitt angeordnet ist, wobei der zweite Abschnitt vorzugsweise um eine horizontale Achse, die insbesondere parallel zur Rotationsachse des Sägeblatts verläuft, bewegbar, insbesondere schwenkbar, ist.

7. Formatkreissäge gemäß einem der vorhergehenden Ansprüche, wobei
- die Steuerungsvorrichtung angeordnet und ausgebildet ist, um eine Eigenschaft eines von der Detektionsvorrichtung erfassten Gegenstands in einem Überwachungsbereich, insbesondere einem Fernüberwachungsbereich und einen Nahüberwachungsbereich auszuwerten, und
- die Steuerungsvorrichtung derart ausgebildet ist, um
o eine dem erfassten Gegenstand zugeordnete Gefährdungssituation auf Basis der Eigenschaft zu erkennen und die erkannte Gefährdungssituation mit vorbestimmten Gefährdungssituationen zu vergleichen,
∘ wobei die vorbestimmten Gefährdungssituationen in einem Katalog, vorzugsweise datentechnisch, hinterlegt sind, und
∘ bei einer festgestellten Übereinstimmung der erfassten Gefährdungssituation mit einer vorbestimmten Gefährdungssituation die Sicherheitsvorrichtung derart anzusteuern, dass diese eine, zwei oder mehrere vorbestimmte Sicherheitsmaßnahmen ausführt.

8. Formatkreissäge gemäß dem vorhergehenden Anspruch 7, wobei die Steuerungsvorrichtung ausgebildet ist,
- bei einer festgestellten Übereinstimmung der erfassten Gefährdungssituation mit einer ersten vorbestimmten Gefährdungssituation die Sicherheitsvorrichtung derart anzusteuern, dass diese mindestens eine erste Sicherheitsmaßnahme ausführt, und
- bei einer festgestellten Übereinstimmung der erfassten Gefährdungssituation mit einer zweiten vorbestimmten Gefährdungssituation die Sicherheitsvorrichtung derart anzusteuern, dass diese mindestens eine zweite Sicherheitsmaßnahme ausführt.

9. Formatkreissäge gemäß dem vorhergehenden Ansprüche 8, wobei
- die erste vorbestimmte Gefährdungssituation und/oder die zweite vorbestimmte Gefährdungssituation das von der Detektionsvorrichtung festgestellte Vorhandensein eines Gegenstands in einem Fernüberwachungsbereichs umfasst, und
- die erste vorbestimmte Gefährdungssituation und/oder die zweite vorbestimmte Gefährdungssituation das von der Detektionsvorrichtung festgestellte Vorhandensein eines Gegenstands in einem Nahüberwachungsbereichs umfasst.

10. Formatkreissäge nach einem der vorhergehenden Ansprüche 8-9, wobei
- die Detektionsvorrichtung angeordnet und ausgebildet ist, eine Geschwindigkeit und/oder eine Beschleunigung eines Gegenstands zu erfassen, und
- die erste vorbestimmte Gefährdungssituation eine Geschwindigkeit eines Gegenstands in einem ersten Geschwindigkeitsbereich, insbesondere oberhalb eines ersten Geschwindigkeitslimits, und/oder eine Beschleunigung eines Gegenstands in einem ersten Beschleunigungsbereich, insbesondere oberhalb eines ersten Beschleunigungslimits, umfasst, und
- die zweite vorbestimmte Gefährdungssituation eine Geschwindigkeit eines Gegenstands in einem zweiten Geschwindigkeitsbereich, insbesondere oberhalb eines zweiten Geschwindigkeitslimits, und/oder eine Beschleunigung eines Gegenstands in einem zweiten Beschleunigungsbereich, insbesondere oberhalb eines zweiten Beschleunigungslimits, umfasst,
- wobei das zweite Geschwindigkeits- bzw. Beschleunigungslimit höher ist als das erste Geschwindigkeits- bzw. Beschleunigungslimit.

11. Formatkreissäge gemäß einem der vorhergehenden Ansprüche 8-10, wobei
- die Detektionsvorrichtung angeordnet und ausgebildet ist, eine Bewegungsrichtung eines Gegenstands zu erfassen, und
- die erste vorbestimmte Gefährdungssituation die Bewegungsrichtung eines Gegenstands in Richtung des Kreissägeblatts in einem ersten Winkelbereich um die direkte Richtung zum Kreissägeblatt umfasst, und
- die zweite vorbestimmte Gefährdungssituation die Bewegungsrichtung eines Gegenstands in Richtung des Kreissägeblatts in einem zweiten Winkelbereich um die direkte Richtung zum Kreissägeblatt umfasst, wobei der zweite Winkelbereich kleiner ist als der erste Winkelbereich.

12. Formatkreissäge gemäß einem der vorhergehenden Ansprüche 7-11, wobei
- die Sicherheitsvorrichtung eine erste Sicherheitsmaßnahme einleitet, wenn
- die Detektionsvorrichtung im Fernüberwachungsbereich eine erste Gefährdungssituation feststellt, und
- die Sicherheitsvorrichtung eine zweite Sicherheitsmaßnahme einleitet, wenn die Detektionsvorrichtung im Nahüberwachungsbereich eine erste oder zweite Gefährdungssituation feststellt,
- wobei die zweite Sicherheitsmaßnahme eine höhere Sicherheit vor Verletzungen bewirkt als die erste Sicherheitsmaßnahme und die erste Sicherheitsmaßnahme so ausgestaltet ist, dass sie eine weitere Bearbeitung des Werkstücks ohne Beeinträchtigung des Schnittergebnisses ermöglicht.

13. Formatkreissäge gemäß einem der vorhergehenden Ansprüche, umfassend
- ein Bedienelement, insbesondere ein mit dem Fuß bedienbares Bedienelement, beispielsweise ein Pedal, das angeordnet und ausgebildet ist, bei Betätigung die Sicherheitsvorrichtung zu deaktivieren.

14. Formatkreissäge gemäß einem der vorhergehenden Ansprüche,
**dadurch gekennzeichnet, dass** die Detektionsvorrichtung eine elektronische Vergleichseinrichtung umfasst, die dazu ausgebildet ist, um mittels einer Erfassungsvorrichtung erfasste Positionen, Bewegungsrichtungen und/oder Bewegungsgeschwindigkeiten eines Werkstücks, eines Bauelements der Formatkreissäge oder eines Körperteils des Benutzers mit vorbestimmten Arbeitsplanungsdaten zur Ausführung eines geplanten Arbeitsvorgangs oder einer Abfolge von Arbeitsvorgängen an dem Werkstück zu vergleichen, wobei die Detektionsvorrichtung ausgebildet ist, um
bei der Feststellung eines Gefährdungszustands eine für diesen Arbeitsvorgang oder diese Abfolge von Arbeitsvorgängen festgestellte untypische Position, Bewegungsrichtung und/oder Bewegungsgeschwindigkeit des Werkstücks, des Bauelements der Formatkreissäge oder des Körperteils zu berücksichtigen oder
bei Feststellung einer für diesen Arbeitsvorgang oder diese Abfolge von Arbeitsvorgängen festgestellten untypischen Position, Bewegungsrichtung und/oder Bewegungsgeschwindigkeit des Werkstücks, des Bauelements der Formatkreissäge oder des Körperteils einen Gefährdungszustands zu signalisieren.

15. Computerimplementiertes Verfahren zur Steuerung und/oder Regelung einer Formatkreissäge, umfassend die Schritte
- Erkennen eines Gefährdungszustandes für ein menschliches Körperteil mittels einer Detektionsvorrichtung, insbesondere einer Detektionsvorrichtung gemäß den Ansprüchen 1-14,
- Einleiten einer Sicherheitsmaßnahme mittels einer Sicherheitsvorrichtung, insbesondere einer Sicherheitsvorrichtung gemäß den Ansprüchen 1-14, wobei die Sicherheitsmaßnahme ausgewählt wird aus der Gruppe bestehend aus
∘ Akustisches und/oder optisches Warnsignal,
∘ Reduktion der Drehzahl eines Kreissägeblatts,
∘ Ausgabe mindestens eines Entschärfungselements aus einer Speichereinheit in Richtung des Kreissägeblatts, insbesondere mittels einer Ausgabevorrichtung gemäß den Ansprüchen 3-5,
∘ Anordnen eines Abschirmelements in einer Abschirmstellung, insbesondere eines Abschirmelements gemäß Anspruch 7,
∘ Absenken des Kreissägeblatts unterhalb einer Werkstückauflagefläche,
- wobei die Sicherheitsmaßnahme ausgewählt wird in Abhängigkeit von
∘ einer Erkennung des menschlichen Körperteils in einem Fernüberwachungsbereich und/oder Nahüberwachungsbereich, und/oder
∘ einer Geschwindigkeit des menschlichen Körperteils, und/oder
∘ einer Beschleunigung des menschlichen Körperteils, und/oder
∘ einer Bewegungsrichtung des menschlichen Körperteils.
